# EUROPEAN PATENT APPLICATION

(11) **EP 4 827 145 A1**
(43) Date of publication of application: **21.10.2026**
(21) Application number: 23961216.1
(22) Date of filing: 15.12.2023
(51) Int. Cl.: H04W 24/02

(54) **CONFIGURATION UPDATE METHOD, FIRST NETWORK DEVICE, SECOND NETWORK DEVICE, AND TERMINAL DEVICE**

(71) Applicant: GUANGDONG OPPO MOBILE TELECOMMUNICATIONS CORP., LTD., Dongguan, Guangdong 523860 (CN)
(72) Inventor: LIN, Xue, Dongguan, Guangdong 523860 (CN); YOU, Xin, Dongguan, Guangdong 523860 (CN); WU, Hao, Dongguan, Guangdong 523860 (CN)
(74) Representative: Penza, Giancarlo
(86) International application number: PCT/CN2023/139264
(87) International publication number: WO 2025/123360

(57) **Abstract**

The present application relates to a configuration update method, a first network device, a second network device, a terminal device, a fifth network device, a chip, a computer-readable storage medium, a computer program product, a computer program, and a communication system. The configuration update method comprises: a first network device receiving a first request from a second network device, wherein the first network device is a network device that a terminal device accesses by means of an LTM process, and the first request is used for requesting the update of an LTM candidate cell configuration associated with the terminal device under the second network device. In the embodiments of the present application, the continuity of an LTM process can be supported, and it is not necessary to re-prepare switching configuration each time a terminal device executes the LTM process, thereby saving on signaling overheads.

## Description

### TECHNICAL FIELD

The disclosure relates to the field of communications, and more specifically, to a configuration update method, a first network device, a second network device, a terminal device, a fifth network device, a chip, a computer-readable storage medium, a computer program product, a computer program, and a communication system.

### RELATED ART

In a wireless communication system, a handover process is generally triggered by Layer 3 (L3) signaling. In order to further reduce a delay in the handover process, a cell handover triggered based on Layer 1 (L1)/Layer 2 (L2) signaling, that is, L1/L2-triggered mobility (LTM) is proposed in the related art. A traditional network-triggered handover process only supports a terminal device to perform the cell handover once, that is, after the terminal device performs the LTM, it needs to re-prepare a handover configuration, which brings a large signaling overhead.

### SUMMARY

The embodiment of the disclosure provides a configuration update method, a first network device, a second network device, a terminal device, a fifth network device, a chip, a computer-readable storage medium, a computer program product, a computer program, and a communication system, which can save signaling overhead for re-preparing the handover configuration.

An embodiment of the disclosure provides a configuration update method, including the following operation.

A first network device receives a first request from a second network device. The first network device is a network device accessed by a terminal device through an LTM procedure. The first request is used for requesting an update of an LTM candidate cell configuration associated with the terminal device and belonging to the second network device.

An embodiment of the disclosure provides a configuration update method, including the following operation.

A second network device transmits a first request to a first network device. The first network device is a network device accessed by a terminal device through an LTM procedure. The first request is used for requesting an update of an LTM candidate cell configuration associated with the terminal device and belonging to the second network device.

An embodiment of the disclosure provides a configuration update method, including the following operations.

A terminal device receives radio resource control (RRC) reconfiguration information from a first network device. The first network device is a network device accessed by the terminal device through a first LTM procedure.

The terminal device updates an LTM candidate cell configuration based on the RRC reconfiguration information, transmits RRC reconfiguration completion information to the first network device, and stops execution of a second LTM procedure until it is determined that the RRC reconfiguration completion information is successfully transmitted.

An embodiment of the disclosure provides a configuration update method, including the following operations.

When a fifth network device is configured as an anchor device, the fifth network device receives a sixth request from a second network device. The sixth request is used for requesting an indication of a network device to which a terminal device is currently accessed. The anchor device is configured to store information about the network device to which the terminal device is currently accessed.

The fifth network device transmits sixth feedback to the second network device. The sixth feedback is used for the second network device to determine the network device to which the terminal device is currently accessed, so that the second network device transmits a first request to the network device to which the terminal device is currently accessed, and the first request is used for requesting an update of an LTM candidate cell configuration associated with the terminal device and belonging to the second network device.

An embodiment of the disclosure provides a first network device, including a transceiver, a processor, and a memory. The memory is configured to store a computer program, the transceiver is configured to communicate with another device, and the processor is configured to call and execute the computer program stored in the memory to cause the first network device to perform the configuration update method described above.

An embodiment of the disclosure provides a second network device, including a transceiver, a processor, and a memory. The memory is configured to store a computer program, the transceiver is configured to communicate with another device, and the processor is configured to call and execute the computer program stored in the memory to cause the second network device to perform the configuration update method described above.

An embodiment of the disclosure provides a terminal device, including a transceiver, a processor, and a memory. The memory is configured to store a computer program, the transceiver is configured to communicate with another device, and the processor is configured to call and execute the computer program stored in the memory to cause the terminal device to execute the configuration update method described above.

An embodiment of the disclosure provides a fifth network device, including a transceiver, a processor, and a memory. The memory is configured to store a computer program, the transceiver is configured to communicate with another device, and the processor is configured to call and execute the computer program stored in the memory to cause the fifth network device to perform the configuration update method described above.

An embodiment of the disclosure provides a chip for implementing the configuration update methods described above.

Specifically, the chip includes a processor configured to call a computer program from a memory and run the computer program to cause a device on which the chip is mounted to execute the configuration update methods described above.

An embodiment of the disclosure provides a computer-readable storage medium for storing a computer program that, when is run by a device, causes the device to execute the configuration update methods described above.

An embodiment of the disclosure provides a computer program product, including computer program instructions that cause a computer to execute the configuration update methods described above.

An embodiment of the disclosure provides a computer program that, when is run on a computer, causes the computer to execute the configuration update methods described above.

An embodiment of the disclosure provides a communication system including a first network device and a second network device for executing the configuration update methods described above.

In the embodiments of the disclosure, after the terminal device accesses the first network device through the LTM procedure, the second network device transmits a first request to the first network device for requesting to update the LTM candidate cell configuration associated with the terminal device and belonging to the second network device, so that continuity of the LTM procedure can be supported, and there is no need to re-prepare the handover configuration after the terminal device executes the LTM procedure every time, thus saving signaling overhead.

### BRIEF DESCRIPTION OF THE DRAWINGS

FIG. 1 is a schematic diagram illustrating a wireless communication system according to an embodiment of the disclosure.
FIG. 2 is a schematic diagram illustrating a cell handover flow across base stations.
FIG. 3 is a schematic diagram illustrating a basic flow of an LTM.
FIG. 4 is a schematic flowchart of a configuration update method according to an embodiment of the disclosure.
FIG. 5 is a schematic flowchart of a configuration update method according to another embodiment of the disclosure.
FIG. 6 is a schematic diagram illustrating an interaction in an application example of a configuration update method according to an embodiment of the disclosure.
FIG. 7 is a schematic flowchart of a configuration update method according to another embodiment of the disclosure.
FIG. 8 is a schematic diagram illustrating a relationship among devices in an application example of a configuration update method according to an embodiment of the disclosure.
FIG. 9 is a flowchart illustrating interactions among devices in an application example of a configuration update method according to the embodiment of the disclosure.
FIG. 10 is a schematic flowchart of a configuration update method according to yet another embodiment of the disclosure.
FIG. 11 is a schematic block diagram of a first network device according to an embodiment of the disclosure.
FIG. 12 is a schematic block diagram of a first network device according to another embodiment of the disclosure.
FIG. 13 is a schematic block diagram of a second network device according to an embodiment of the disclosure.
FIG. 14 is a schematic block diagram of a second network device according to another embodiment of the disclosure.
FIG. 15 is a schematic block diagram of a terminal device according to an embodiment of the disclosure.
FIG. 16 is a schematic block diagram of a fifth network device according to an embodiment of the disclosure.
FIG. 17 is a schematic block diagram of a communication device according to an embodiment of the disclosure.
FIG. 18 is a schematic block diagram of a chip according to an embodiment of the disclosure.
FIG. 19 is a schematic block diagram of a communication system according to an embodiment of the disclosure.

### DETAILED DESCRIPTION

The technical solutions in the embodiments of the disclosure will be described below with reference to the accompanying drawings in the embodiments of the disclosure.

The technical solutions in the embodiments of the disclosure are applicable to various communication systems, such as: a new radio (NR) system, an evolved system of an NR system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) system, a 6th-generation (6G) system, or other communication systems, etc.

Generally, a conventional communication system supports a limited number of connections and is easy to be implemented, however, with a development of communication technology, a mobile communication system will not only support a conventional communication, but also support, for example, a device-to-device (D2D) communication, a machine-to-machine (M2M) communication, a machine type communication (MTC), a vehicle-to-vehicle (V2V) communication, or a vehicle-to-everything (V2X) communication, and the like, and the embodiments of the disclosure may also be applied to these communication systems.

In an implementation, the communication system in the embodiments of the disclosure may be applied to a carrier aggregation (CA) scenario, a dual connectivity (DC) scenario, and a standalone (SA) network deployment scenario.

In an implementation, the communication system in the embodiments of the disclosure may be applied to an unlicensed spectrum, and the unlicensed spectrum may also be considered as a shared spectrum. Alternatively, the communication system in the embodiments of the disclosure may also be applied to a licensed spectrum, and the licensed spectrum may also be considered as a non-shared spectrum.

Various embodiments of the disclosure have been described in connection with a network device and a terminal device. The terminal device may also be referred to as a user equipment (UE), an access terminal, a user unit, a user station, a mobile unit, a mobile station, a remote station, a remote terminal, a mobile device, a user terminal, a terminal, a wireless communication device, a user agent, a user device, or the like.

The terminal device may be a station (ST) in a WLAN, and may also be a cellular phone, a cordless phone, a session initiation protocol (SIP) phone, a wireless local loop (WLL) station, a personal digital assistant (PDA) device, a handheld device with a wireless communication capability, a computing device or other processing device connected to a wireless modem, an in-vehicle device, a wearable device, a terminal device in a next generation communication system such as an NR Network, a terminal device in a future evolved public land mobile network (PLMN), or the like.

In an embodiment of the disclosure, the terminal device may be deployed on land, including indoor or outdoor, handheld, wearable, or vehicle-mounted. The terminal device may also be deployed on a water surface (e.g. on ships, etc.). The terminal device may also be deployed in the air (e.g. on aircraft, balloons and satellites, etc.).

In the embodiments of the disclosure, the terminal device may be a mobile phone, a tablet computer (pad), a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, a wireless terminal device in a smart home, or the like.

By way of example and not limitation, in the embodiment of the disclosure, the terminal device may also be a wearable device. The wearable device, known as a wearable smart device, is a collective term of wearable devices which are developed by applying a wearable technology for intelligently design of daily wearable items, such as glasses, a glove, a watch, a cloth and shoes. The wearable device is a portable device that is worn directly on the body or integrated into the cloth or an accessory of a user. The wearable device is not only a hardware device, but also can realize a powerful function through software support, data interaction and cloud interaction. Broadly speaking, the wearable smart devices include full-featured and large-sized devices which may realize complete or partial functionality without relying on a smart phone, such as a smart watch or smart glasses, as well as devices that focus on a certain type of application functionality and need to be used in conjunction with other devices such as a smart phone, including various smart bracelets and smart jewelry for physical sign monitoring.

In the embodiments of the disclosure, the network device may be a device for communicating with a mobile device, and the network device may be an access point (AP) in a WLAN, a relay station, an access point, a vehicle-mounted device, a wearable device, a network device (gNB) in an NR network, a network device in a future evolved PLMN, a network device in an NTN network, or the like.

By way of example and not limitation, in the embodiment of the disclosure, the network device may have mobile characteristics, and for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station located on land, in water, or in other locations.

In the embodiments of the disclosure, the network device is capable of providing services for a cell, and the terminal device communicates with the network device through a transmission resource (e.g., a frequency domain resource, or a frequency spectrum resource) used by the cell. The cell may be a cell corresponding to the network device (e.g., a base station), and the cell may belong to a macro base station or a base station corresponding to a small cell. The small cells here may include: a metro cell, a micro cell, a pico cell, a femto cell, etc. These small cells have the characteristics of small coverage and low transmission power, and are suitable for providing a high-speed data transmission service.

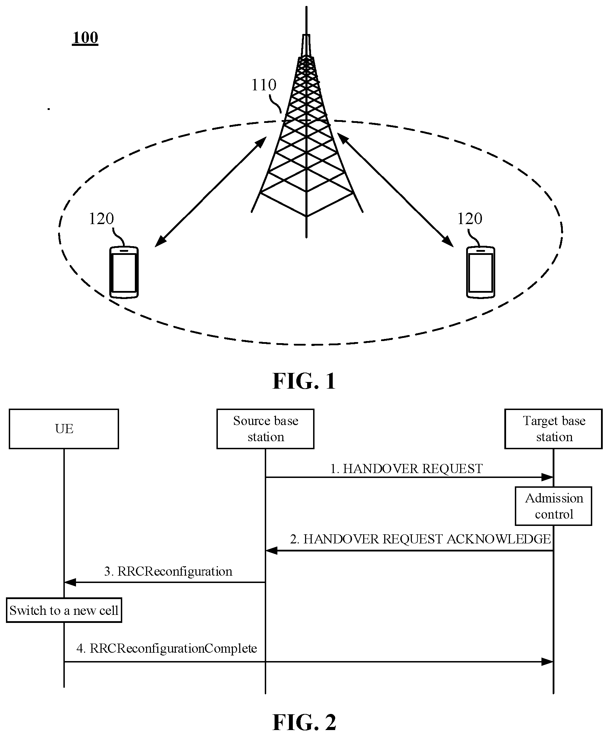

Illustratively, FIG. 1 illustrates a communication system 100. The communication system includes a network device 110 and two terminal devices 120. In an implementation, the communication system 100 may include a plurality of network devices 110, and another number of terminal devices 120 may be included within a coverage of each network device 110, which is not limited in the embodiments of the disclosure.

It will be appreciated that, a device having a communication capability in the network/system in the embodiments of the disclosure may be referred to as a communication device. Taking the communication system shown in FIG. 1 as an example, the communication device may include the network device and the terminal device, both of which have a communication capability, and the network device and the terminal device may be specific devices in the embodiments of the disclosure, which will not be repeated here. The communication device may also include other devices in the communication system, such as a network controller, a mobile management entity and other network entities, which are not limited in the embodiments of the disclosure.

It will be appreciated that the terms "system" and "network" are often used interchangeably herein. The term "and/or" is merely used herein to describe an association between associated objects, and indicates that there may be three relationships, for example, A and/or B, which may indicate that: independent existence of A, existence of both A and B and independent existence of B. In addition, the character "/" herein generally indicates that the associated objects before and after are in an "or" relationship.

It will be appreciated that the "indication" mentioned in the embodiments of the disclosure may be a direct indication, an indirect indication, or may refer to an association. By way of example, A indicates B, which may represent that A directly indicates B, e.g., B may be obtained through A; which may also represent that A indirectly indicates B, e.g., A indicates C, and B may be obtained through C; which may also represent that there is an association between A and B.

In the description of the embodiments of the disclosure, the term "correspondence" may represent that there is a direct correspondence or an indirect correspondence between two items, or may represent that there is an association between the two items, or may be a relationship between indication and being indicated, configuration and being configured, or the like.

In order to facilitate understanding of the technical solutions in the embodiments of the disclosure, technologies related to the embodiments of the disclosure will be described below. The following related technologies, as optional solutions, may be arbitrarily combined with the technical solutions in the embodiments of the disclosure, and all of combinations belong to the scope of protection of the embodiments of the disclosure.

### (1) Traditional handover procedure

Similar to the LTE system, the NR system supports a handover procedure for a connected UE. When a user who is using a network service moves from one cell to another cell, or due to an adjustment in a wireless transmission service load, an activation of operation maintenance, a failure in a device, etc., in order to ensure a continuity of communication and a quality of service, the system transfers a communication link between the user and an original cell to a new cell, that is, performs the handover procedure.

FIG. 2 is a schematic diagram illustrating a cell handover flow across base stations, and a general flow is described as follows.
1. A source base station triggers a handover based on an L3 measurement result reported by a UE, and transmits a handover request to a target cell through an Xn interface.
2. The target base station receives the handover request from the source base station, provides an RRC configuration of the target cell, and feeds back to the source base station as a part of a handover request acknowledgement.
3. The source base station transmits, to the UE, an RRC reconfiguration (RRCReconfiguration) for instructing the UE to initiate a handover flow, and RRC configuration information for accessing the target cell.
4. The UE accesses the target cell and transmits an RRC reconfiguration completion (RRCReconfigurationComplete) to the target cell. In order to establish uplink synchronization with the target cell, the UE needs to initiate a random access procedure to the target cell after receiving a handover command.

### (2) LTM procedure

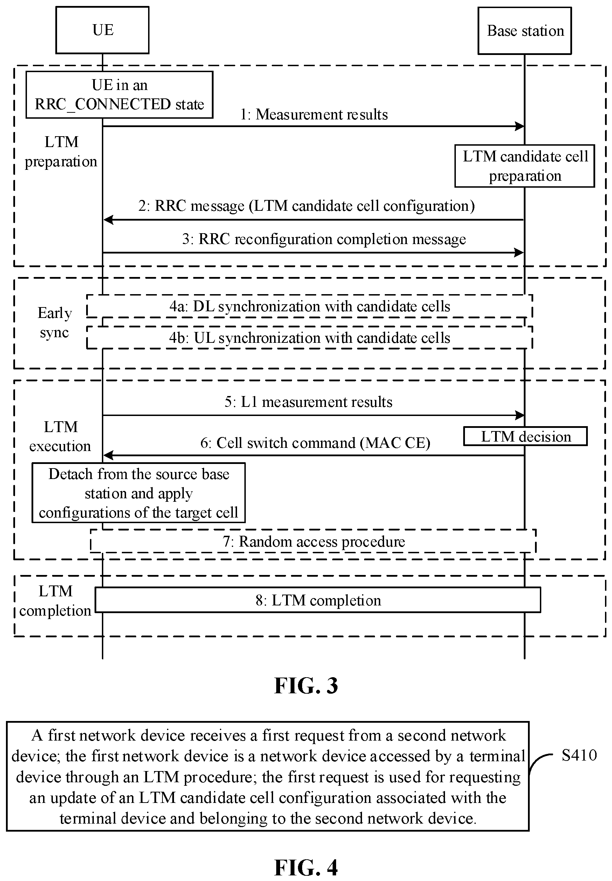

In the related art, the handover procedure is generally triggered by L3 signaling (RRCReconfiguration), and in order to further reduce a delay in the L3 handover process, in the related art, the cell handover triggered by L1/L2 signaling, that is, LTM, is supported. FIG. 3 is a schematic diagram illustrating a basic flow of the LTM. As shown in FIG. 3, the LTM mainly includes the following operations.
1. A UE reports an L3 measurement result to a base station, and the base station determines to initiate the LTM procedure and triggers an LTM candidate cell preparation.
2. The base station transmits an RRC message (i.e., an RRCReconfiguration message) including an LTM candidate cell configuration to the UE, and the number of candidate cells is one or more.
3. The UE stores the LTM candidate cell configuration and feeds back a reconfiguration completion message (i.e. an RRCReconfigurationComplete message) to the network.
4. Before receiving an LTM cell handover command, the UE may perform uplink/downlink synchronization with candidate cells in advance to reduce an interrupt delay in the handover process.
5. The UE executes L1 measurement on each of the candidate cells, and reports the L1 measurement result to the network.
6. The base station determines a target cell based on the L1 measurement result reported by the UE, and instructs the UE to switch to the target cell through a media access control control element (MAC CE).
7. If the UE currently does not have a valid timing advance (TA) of the target cell, after receiving the LTM cell handover instruction, the UE initiates a random access procedure to the target cell.
8. The UE transmits, to the target cell, indication information that the LTM has been successfully completed.

When the LTM is introduced, the LTM only supports an intra-CU (handover within a centralized unit (CU)) scenario, and does not involve interaction between Xn interfaces. In order to further extend the scenario for the LTM, the LTM supporting inter-CU (handover between CUs) is considered in the related art.

FIG. 4 is a schematic flowchart of a configuration update method according to an embodiment of the disclosure. The method may optionally be applied to the system shown in FIG. 1, but is not limited thereto. The method includes the following operation.

At S410, a first network device receives a first request from a second network device. The first network device is a network device accessed by the terminal device through an LTM procedure, and the first request is used for requesting an update of an LTM candidate cell configuration associated with the terminal device and belonging to the second network device.

In the embodiment of the disclosure, the first network device is a network device accessed through the LTM procedure, that is, the first network device is one of candidate network devices in the LTM procedure, and is a target network device in an LTM procedure. Here, an LTM candidate network device may be understood as a network device configured with one or more LTM candidate cells. The LTM procedure may include that: a terminal device receives a MAC CE transmitted by a network device to which it is accessed, and performs cell handover based on the MAC CE. For example, the LTM procedure may include the operations 5 to 7 in the (2) LTM procedure in the related art described above. The cell handover may be an inter-CU or an intra-CU handover.

In some examples, the aforementioned target network device may include a target base station (a target gNB, T-gNB).

In the embodiment of the disclosure, the second network device has the LTM candidate cell configuration associated with the terminal device, that is, the second network device is an LTM candidate network device for the terminal device, for example, an LTM candidate base station (a candidate-gNB, C-gNB).

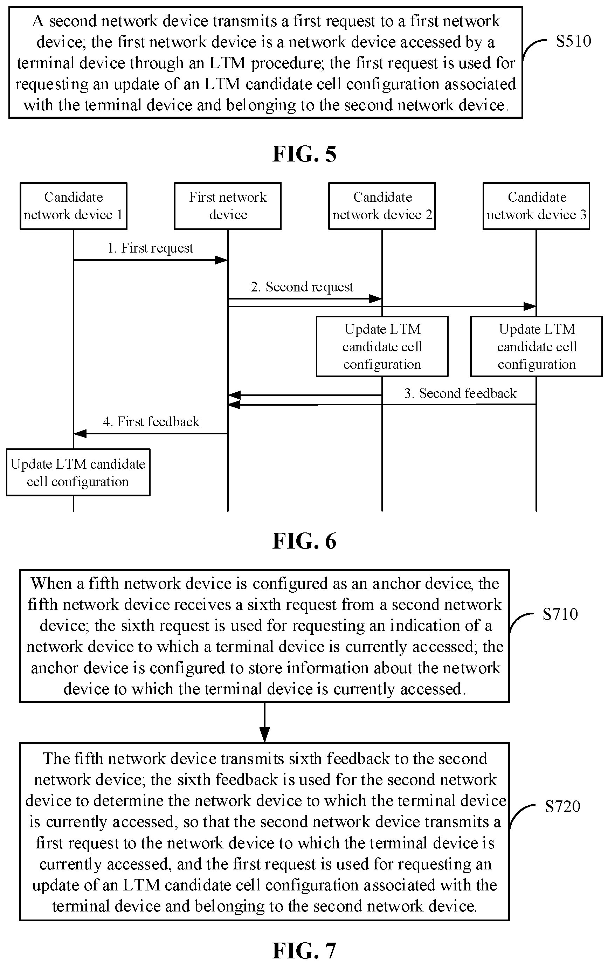

The disclosure further provides a configuration update method executed by a second network device, corresponding to the above-described method. FIG. 5 is a schematic flowchart of a configuration update method according to another embodiment of the disclosure. The method includes the following operation.

At S510, the second network device transmits a first request to a first network device. The first network device is a network device accessed by a terminal device through an LTM procedure, and the first request is used for requesting an update of an LTM candidate cell configuration associated with the terminal device and belonging to the second network device.

According to an embodiment of the disclosure, after the terminal device accesses the first network device through the LTM procedure, the second network device transmits the first request, and the first network device receives the first request. The first request is used for requesting updating the LTM candidate cell configuration associated with the terminal device and belonging to the second network device. That is, after executing the LTM procedure, the original LTM candidate cell configuration may be retained and updated on the basis thereof, and it is not necessary to re-prepare the LTM candidate cell configuration every time the terminal device executes the LTM procedure, that is, the continuity of the LTM procedure is supported, so that signaling overhead can be saved, and an immediacy of the handover can be guaranteed.

For example, the terminal device may complete an LTM candidate cell preparation with a network device to which it is accessed (for example, a base station, which may be referred to as a source network device) through the operations 1 to 3 shown in FIG. 3, and optionally, the terminal device may also complete the operations 4a and 4b shown in FIG. 3 to synchronize with the candidate cell in advance. Thereafter, the terminal device may complete the LTM procedure through the operations 5 to 7 as shown in FIG. 3 to switch the accessed target cell. The LTM procedure may be an inter-CU handover through which the terminal device is accessed to the first network device from the source network device. Thereafter, the first network device may receive the original LTM candidate cell configuration, the terminal device also retains the original LTM candidate cell configuration and may update the original LTM candidate cell configuration, then may initiate one or more LTM procedures again without re-executing the LTM candidate cell preparation.

Optionally, the update of the LTM candidate cell configuration associated with the terminal device and belonging to the second network device may include: releasing (or deleting) configuration information of one or more LTM candidate cells associated with the terminal device and belonging to the second network device, and/or changing configuration information of one or more LTM candidate cells associated with the terminal device and belonging to the second network device.

Optionally, the first request may include an identifier of an LTM candidate cell for which the configuration information needs to be released or changed, and/or an updated LTM candidate cell configuration. For example, it is assumed that the LTM candidate cells associated with the terminal device and belonging to the second network device include cell 1, cell 2, and cell 3. If the second network device needs to request to change the configuration information for the cell 3, the second network device may include the identifier of the cell 3, or may include the changed configuration information for the cell 3. If the second network device needs to request the release of the cell 3, the first request may include an identifier of the cell 3, or may include an updated LTM candidate cell configuration, which includes configuration information for the cell 1 and the cell 2, but excludes the configuration information for the cell 3.

In some embodiments, the method may further include that: the first network device transmits first feedback to the second network device. The first feedback is used for confirming the update of the LTM candidate cell configuration associated with the terminal device.

Accordingly, for the second network device, the method may further include that: the second network device receives first feedback from the first network device. The first feedback is used for confirming the update of the LTM candidate cell configuration associated with the terminal device.

Optionally, the first feedback may be used for confirming that the second network device is allowed to perform the update, and/or confirming that the configuration update has been completed. In some embodiments, the method may further include that: after receiving the first feedback, the second network device updates the LTM candidate cell configuration associated with the terminal device and belonging to the second network device.

In some embodiments, the method may further include that: the first network device transmits a second request to a third network device. The second request includes update information of the LTM candidate cell configuration associated with the terminal device and belonging to the second network device, the update information is determined based on the first request, and the update information is used for instructing the third network device to update an LTM candidate cell configuration associated with the terminal device and belonging to the third network device.

Optionally, the update information may include relevant configuration information determined by the first network device based on an update content requested by the second network device. Exemplarily, the update information may include an identifier of an LTM candidate cell for which the second network device needs to release or change the configuration information, and/or an updated LTM candidate cell configuration associated with the terminal device.

Optionally, the updated LTM candidate cell configuration associated with the terminal device may include one or more of the following information: an identifier (ID) assigned by the first network device to each LTM candidate cell, an L1 measurement reporting configuration associated with an ID of an LTM candidate cell, a random access resource configuration for initiating an early sync with the LTM candidate cell, or a transmission configuration indicator (TCI) status list associated with the LTM candidate cell.

According to the above-described optional method, the third network device may update the LTM candidate cell configuration associated with the terminal device and belonging to the third network device based on the update information (for example, based on the allocation by the first network device).

Optionally, the first network device may transmit the second request to the third network device after the first network device receives the first request and before the first network device transmits the first feedback.

It will be appreciated that, the third network device is configured with the LTM candidate cell for the terminal device, that is, the third network device is another LTM candidate network device, other than the second network device, that is associated with the terminal device, such as a C-gNB.

In some embodiments, after the first network device transmits the second request to the third network device, the method may further include that: the first network device receives second feedback from the third network device. The second feedback includes an updated LTM candidate cell configuration associated with the terminal device, as updated by the third network device. That is, the second feedback may include an LTM candidate cell configuration associated with the terminal device and belonging to the third network device, which is redetermined by the third network device based on the second request, and for example, may include configuration information for one or more LTM candidate cells.

Accordingly, as the LTM candidate network device, the second network device may also receive a second request transmitted by the first network device. The second request is transmitted in response to the first network device receiving a first request transmitted by another LTM candidate network device (for example, the third network device), and the first request is used for requesting an update of the LTM candidate cell configuration associated with the terminal device and belonging to the another LTM candidate network device (for example, the third network device).

Specifically, the method may further include the following operations. The second network device receives the second request from the first network device. The second request includes update information of an LTM candidate cell configuration associated with the terminal device. The second network device updates the LTM candidate cell configuration associated with the terminal device and belonging to the second network device based on the update information.

In some embodiments, after the second network device receives the second request from the first network device, the method may further include that: the second network device transmits second feedback to the first network device. The second feedback includes an updated LTM candidate cell configuration associated with the terminal device and belonging to the second network device.

In order to facilitate understanding of the above technical solution, FIG. 6 is a schematic diagram illustrating an interaction in an application example of a configuration update method according to an embodiment of the disclosure. As shown in FIG. 6, the method may include the following operations.
1. The first network device to which the terminal device is currently accessed receives a first request from any LTM candidate network device (for example, a candidate network device 1 in the application example) to request an update of an LTM candidate cell configuration belonging to the LTM candidate network device.
2. The first network device transmits a second request to other LTM candidate network devices (for example, the candidate network device 2 and the candidate network device 3 in the application example), and the second request includes update information of the LTM candidate cell configuration.
3. The candidate network device 2 and the candidate network device 3 each updates the LTM candidate cell configuration based on the second request, and transmits second feedback to the first network device. The second feedback includes the updated LTM candidate cell configuration of the candidate network device.
4. After receiving the second feedback, the first network device transmits the first feedback to the candidate network device 1, so that the candidate network device 1 updates the LTM candidate cell configuration after receiving the first feedback.

In some embodiments, the method may further include the following operations.

The first network device transmits RRC reconfiguration information (i.e., RRCReconfiguration) to the terminal device. The RRC reconfiguration information is used for instructing the terminal device to update the LTM candidate cell configuration.

The first network device receives RRC reconfiguration completion information from the terminal device.

Optionally, the first network device may transmit the RRC reconfiguration information to the terminal device and receive the RRC reconfiguration completion information, after the first network device receives the first request and before the first network device transmits the first feedback. Optionally, it may be combined with the aforementioned embodiment in which the first network device transmits the second request to the third network device and receives the second feedback, and for example, after the first network device receives the second feedback, the first network device may transmit the RRC reconfiguration information to the terminal device and receive the RRC reconfiguration completion information.

In the above embodiment, the LTM candidate cell configuration is synchronized with the terminal device, so that the terminal device can avoid executing the LTM procedure by adopting an outdated LTM candidate cell configuration.

According to the above-described embodiment of the disclosure, a plurality of candidate cells managed by different network devices may be pre-configured for the terminal device in the communication system, and updating operations such as adding/modifying/deleting may be performed on the candidate cells at any time in the subsequent LTM-related process. However, in the current signaling interaction process via the Xn interface between network devices, when the terminal device moves between coverage areas of a plurality of candidate network devices, the candidate network devices other than the accessed network device are unaware of the network device to which the terminal device is currently accessed, which may cause the network to fail to update the LTM candidate cell configuration.

For example, a source network device (Source-gNB, S-gNB) requests the candidate network devices (including the second network device, the third network device, and the fifth network device) to provide/prepare candidate cell configurations for an LTM procedure, respectively, and generates LTM configurations based on feedback from the three candidate network devices and transmits them to the terminal device. When the terminal device is handed over from the S-gNB to the first network device, if the second network device wants to delete some candidate cells previously provided, the second network device cannot determine the target network device (i.e. the first network device) because it is unaware of a location of the terminal device after movement, and thus cannot initiate the configuration update.

In view of the above problem, embodiments of the disclosure also provide a plurality of optional implementation methods.

### First method

In some embodiments, the method may further include that: when confirming that the LTM procedure is completed, the first network device transmits a first message to an anchor device. The first message is used for the anchor device to update information about a network device to which the terminal device is currently accessed, and the information about the network device is used for LTM candidate network device(s) associated with the terminal device to determine the network device to which the terminal device is currently accessed.

That is, an anchor device is provided in the system for storing the information about the network device to which the terminal device is currently accessed, such as an identifier of the network device to which the terminal device is currently accessed. When the terminal device is handed over to the first network device through the LTM procedure, the first network device transmits the first message to the anchor device to cause the anchor device to update the currently accessed network device, specifically, to update the currently accessed network device to the first network device. Then, each LTM candidate network device may determine or query, from the anchor device, that the network device to which the terminal device is currently accessed is the first network device, so that the first request may be transmitted to the first network device.

Accordingly, in some embodiments, the above method may further include the following operations.

The second network device transmits a sixth request to the anchor device. The sixth request is used for requesting an indication of a network device to which the terminal device is currently accessed. The anchor device is configured to store information about the network device to which the terminal device is currently accessed.

The second network device receives sixth feedback from the anchor device. The sixth feedback is used for the second network device to determine that the first network device is the network device to which the terminal device is currently accessed.

That is, the second network device determines the network device to which the terminal device is currently accessed by transmitting the request information and the feedback information with the anchor device.

Alternatively, the anchor device may be a network device or another device, such as a specific terminal device, an application server, or the like.

In some embodiments, the anchor device is a network device, and any LTM candidate network device for the terminal device may be configured as the anchor device. FIG. 7 is a schematic flowchart of a configuration update method according to another embodiment of the disclosure. The method includes the following operations.

At S710, when a fifth network device is configured as an anchor device, the fifth network device receives a sixth request from a second network device. The sixth request is used for requesting an indication of a network device to which a terminal device is currently accessed. The anchor device is configured to store information about the network device to which the terminal device is currently accessed.

At S720, the fifth network device transmits sixth feedback to the second network device. The sixth feedback is used for the second network device to determine the network device to which the terminal device is currently accessed, so that the second network device transmits a first request to the network device to which the terminal device is currently accessed, and the first request is used for requesting an update of an LTM candidate cell configuration associated with the terminal device and belonging to the second network device.

It will be appreciated that, when any LTM candidate network device needs to update the LTM candidate cell configuration, it may transmit the sixth request to the anchor device to obtain the sixth feedback, thereby determining the network device to which the terminal device is currently accessed, and transmitting the first request to the currently accessed network device.

In some embodiments, the method may further include the following operation.

When the fifth network device is configured as the anchor device, the fifth network device receives a first message from a first network device. The first network device is a network device accessed by the terminal device after completing the LTM procedure. The first message is used for the fifth network device to update the information about the network device to which the terminal device is currently accessed.

It will be appreciated that, after the terminal device is handed over to access any network device through the LTM procedure, the network device may transmit the first message to the anchor device, so that the anchor device updates the information about the network device to which the terminal device is currently accessed.

It will be appreciated that, for the fifth network device, an order in which the sixth request is received and the first message is received is not limited after it is configured as the anchor device.

Optionally, the anchor device may not be a fixed network device, but may be changed in the LTM-related procedure.

In some embodiments, an initial anchor device may be determined during the LTM candidate cell preparation phase. Specifically, the method may further include the following operations.

The fifth network device receives a seventh request transmitted by a fourth network device during the LTM candidate cell preparation phase. The seventh request is used for requesting configuration of the fifth network device as the anchor device.

The fifth network device transmits seventh feedback to the fourth network device. The seventh feedback is used to indicate whether the fifth network device accepts being configured as the anchor device.

Here, the fourth network device may be a network device to which the terminal device is accessed during the LTM candidate cell preparation stage, that is, a source network device, for example, a source base station (Source-gNB, S-gNB).

According to the above-described embodiment, the fourth network device may request another network device to be configured as the anchor device during the LTM candidate cell preparation phase. Optionally, the fourth network device may transmit a seventh request to one or more LTM candidate network devices.

Optionally, when the seventh feedback transmitted by the fifth network device is positive feedback, that is, when the seventh feedback indicates that the fifth network device accepts being configured as an anchor device, the fourth network device may transmit a second message to each LTM candidate network device to synchronize the information of the anchor device.

In some embodiments, the method may further include that: the first network device/the second network device receives a second message from the fourth network device. The fourth network device is a network device accessed by the terminal device during an LTM candidate cell preparation. The second message is used for the first network device/the second network device to determine an initial anchor device.

Specifically, the fourth network device transmits the second message to each LTM candidate network device associated with the terminal device in the LTM candidate cell preparation stage. At this time, the terminal device has not accessed the first network device through the LTM procedure, and the first network device is one of the LTM candidate network devices. Accordingly, the first network device receives the second message and determines the initial anchor device based on the second message. Further, the second network device may also receive the second message and determine the initial anchor device based on the second message.

Optionally, the anchor device may be changed in a subsequent LTM-related process. An embodiment of the disclosure further provides a way for changing the anchor device. Specifically, the configuration update method may further include the following operations.

When the fifth network device is configured as an anchor device, the fifth network device transmits an eighth request to one or more LTM candidate network devices associated with the terminal device. The eighth request is used for requesting the LTM candidate network device(s) to accept being configured as an anchor device.

When receiving positive feedback for the eighth request from a sixth network device, the fifth network device transmits a third message to the one or more LTM candidate network devices associated with the terminal device. The third message indicates that the sixth network device is a new anchor device.

Accordingly, from a perspective of the LTM candidate network device, the above method may further include that: the first network device/the second network device receives a third message from the initial anchor device. The third message is used for the first network device/the second network device to determine the new anchor device.

That is, a change process for the anchor device may be performed between the anchor device and other LTM candidate network device(s). Specifically, the anchor device asks the other LTM subsequent network device(s) whether to accept being configured as the anchor device through the eighth request. If the positive feedback (ACK (acknowledge) feedback) is received from a network device (the sixth network device), the original anchor device may synchronize new anchor device information with other LTM candidate network device(s), and release its own anchor device identity.

It will be appreciated that, in the case where the fifth network device is configured as the anchor device, this may refer to the fifth network device being configured as the initial anchor device during the LTM candidate cell preparation phase, or the fifth network device being configured as the new anchor device after transmitting positive feedback upon receiving the eighth request from the anchor device.

In order to facilitate understanding of the above-described method of determining the network device to which the terminal device is currently accessed through the anchor device, the disclosure provides an application example, and the above-described method is exemplarily described in a sequential manner.

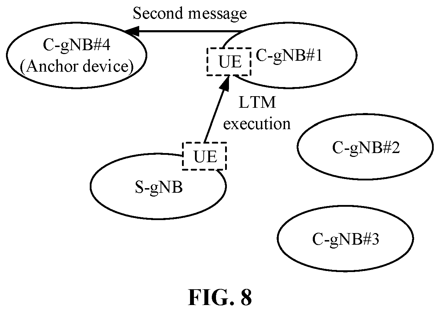

FIG. 8 is a schematic diagram illustrating a relationship among devices in this application example in which a network configures one or more C-gNBs (the LTM candidate network devices) for a terminal device (UE), including C-gNB#1, C-gNB#2, C-gNB#3, and C-gNB#4.

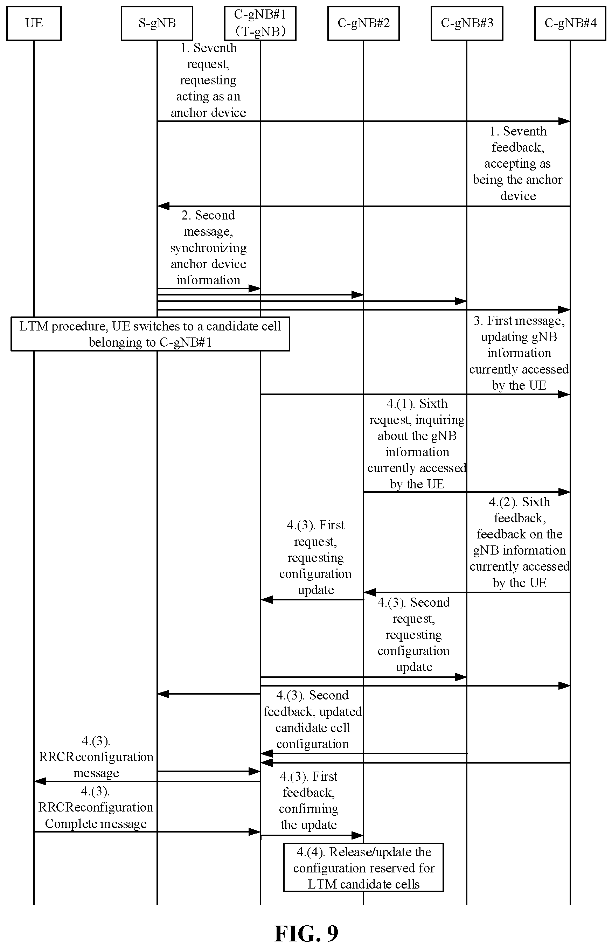

FIG. 9 is a flowchart illustrating interactions among the devices in this application example. As shown in FIG. 9, in this application example, the configuration method may include the following operations.
1. During an LTM candidate cell preparation phase, an S-gNB (the fourth network device) transmits a seventh request to any one or more C-gNBs. The seventh request may include an instruction for requesting the C-gNB to act as an anchor device (an anchor gNB).
   Correspondingly, the C-gNB transmits seventh feedback to the S-gNB, and the seventh feedback may include an indication of whether it accepts the role of the anchor device.
2. After determining the anchor device, the S-gNB transmits a second message to each C-gNB for synchronizing the anchor device information to the other C-gNBs.
3. The network instructs the UE, based on the LTM candidate cell configuration, to perform the LTM procedure through an LTM cell handover instruction (the MAC CE), for example, if a distributed unit of the S-gNB (the S-gNB-DU) instructs the UE to handover to a certain candidate cell belonging to the C-gNB#1, the C-gNB#1 becomes the T-gNB (a target network device). As shown in FIGS. 8 and 9, the UE is handed over from the S-gNB to the C-gNB#1.
   After the T-gNB confirms that the LTM has been successfully completed (for example, receives the RRCReconfigurationComplete message transmitted by the UE and/or receives an LTM successful completion indication transmitted from the T-gNB-DU), the T-gNB transmits a first message to the anchor device. The first message is used for updating, to the anchor device, information about the gNB (the information about the network device) to which the UE is currently accessed, and further, the first message may further include UE identification information. In addition, each time the LTM procedure is completed, the S-gNB needs to transmit the current C-gNB information and the candidate cell configuration belonging to the C-gNB to the new S-gNB, that is, the T-gNB.
4. In the subsequent LTM procedure (the subsequent LTM-related process), assuming that the C-gNB#2 wants to delete or update all or part of the LTM candidate cells belonging to that node, the behavior of the C-gNB#2 includes the following operations.
   (1) The C-gNB#2 transmits a sixth request to the anchor device. The sixth request is used to inquire, from the anchor device, information about the gNB (T-gNB) to which the UE is currently accessed.
   (2) The anchor device transmits sixth feedback to the C-gNB#2, and the sixth feedback is used to inform the T-gNB information.
   (3) The C-gNB#2 transmits a first request to the T-gNB for requesting release of all or a part of the candidate cells belonging to the C-gNB#2 or requesting update of configuration information for all or a part of the candidate cells belonging to the C-gNB#2. Further, the first request includes an identifier of a candidate cell that needs to be released/updated, and/or an updated candidate cell configuration.

The T-gNB transmits first feedback to the C-gNB#2, and the first feedback is used for confirming that the configuration update has been completed.

Optionally, before transmitting the first feedback, the T-gNB transmits a second request to other C-gNBs and receives second feedback from the other C-gNBs. The second request includes an ID of a candidate cell that needs to be updated/released, and/or an updated candidate cell configuration. The second feedback includes the candidate cell configuration updated by the C-gNB based on the second request.

Optionally, the T-gNB transmits an RRCReconfiguration message to the UE after receiving the second feedback, and transmits the first feedback to the C-gNB#2 after receiving the RRCReconfigurationComplete message from the UE.

(4) After receiving the first feedback, the C-gNB#2 releases/updates the configuration reserved for the LTM candidate cell.

5. The change process for the anchor device may be performed between the anchor device and other C-gNBs. For example, the anchor device asks other C-gNBs whether they are willing to become the new anchor device. If an ACK is received from a certain C-gNB, the original anchor device synchronizes the information of the new anchor device with other C-gNBs, and then releases its anchor device identity.

In addition to the first method of determining, by the anchor device, the network device to which the terminal device is currently accessed described above, the disclosure also provides other optional implementations for determining the network device to which the terminal device is currently accessed.

### Second method

In some embodiments, the configuration update method may further include the following operations.

When confirming that the LTM procedure has been completed, the first network device transmits a fourth message to one or more LTM candidate network devices associated with the terminal device. The one or more LTM candidate network devices include the second network device, and the fourth message is used for the one or more LTM candidate network devices to determine that the first network device is a network device to which the terminal device is currently accessed.

It will be appreciated that the above-described LTM procedure is an LTM procedure in which the terminal device is handed over to the first network device. That is, when it is confirmed that the terminal device is handed over to the first network device through the LTM procedure, the first network device transmits the fourth message to other LTM candidate network devices to synchronize the information about the network device to which the terminal device is currently accessed.

Accordingly, in some embodiments, the configuration update method may further include that: the second network device receives a fourth message transmitted by the first network device when confirming that the LTM procedure has been completed. The fourth message is used for the second network device to determine that the first network device is the network device to which the terminal device is currently accessed.

As an example, the configuration update method may include the following operations.
1. The network instructs the UE, based on the LTM candidate cell configuration, to perform the LTM procedure through an LTM cell handover instruction (the MAC CE), for example, if the distributed unit of the S-gNB (the S-gNB-DU) instructs the UE to handover to a certain candidate cell belonging to the C-gNB#1, the C-gNB#1 becomes the T-gNB (the target network device).
   After the T-gNB confirms that the LTM has been successfully completed (for example, receives an RRCReconfigurationComplete message transmitted by the UE and/or receives an LTM successful completion indication transmitted from the T-gNB-DU), the T-gNB transmits a fourth message to other C-gNBs. The fourth message is used for updating, to the other C-gNBs, the information about the gNB to which the UE is currently accessed, and further, the fourth message may further include UE identification information.
2. When the C-gNB#2 needs to update the candidate cell configuration belonging to the C-gNB#2, the gNB to which the UE is currently accessed is determined based on the latest received fourth message, and the following operations are performed.
   (1) The C-gNB#2 transmits a first request to the T-gNB for requesting release of all or a part of the candidate cells belonging to the C-gNB#2 or requesting update of configuration information for all or a part of the candidate cells belonging to the C-gNB#2. Further, the first request includes an identifier of a candidate cell that needs to be released/updated, and/or an updated candidate cell configuration.

The T-gNB transmits first feedback to the C-gNB#2, and the first feedback is used for confirming that the configuration update has been completed.

Optionally, before transmitting the first feedback, the T-gNB transmits the second request to the other C-gNBs and receives the second feedback from the other C-gNBs. The second request includes an ID of a candidate cell that needs to be updated/released, and/or an updated candidate cell configuration. The second feedback includes the candidate cell configuration updated by the C-gNB based on the second request.

Optionally, the T-gNB transmits an RRCReconfiguration message to the UE after receiving the second feedback, and transmits the first feedback to the C-gNB#2 after receiving the RRCReconfigurationComplete message from the UE.

(2) After receiving the first feedback, the C-gNB#2 releases/updates the configuration reserved for the LTM candidate cell.

### Third method

In some embodiments, before the second network device transmits the first request to the first network device, the method may further include the following operations.

The second network device transmits a third request to one or more LTM candidate network devices associated with the terminal device. The third request is used for requesting each of the one or more LTM candidate network devices to confirm whether the LTM candidate network device is a network device to which the terminal device is currently accessed.

The second network device receives third feedback from the one or more LTM candidate network devices. The third feedback is used for the second network device to determine the network device to which the terminal device is currently accessed.

That is, when an LTM candidate network device needs to perform an LTM candidate cell configuration update, the LTM candidate network device inquires of each of the other LTM candidate network devices whether it is the network device to which the terminal device is currently accessed, and determines the network device to which the terminal device is currently accessed based on the response from the each device.

Optionally, the third feedback is positive feedback, the first network device to which the terminal device is currently accessed will transmit the third feedback, and other LTM candidate network devices may not transmit the third feedback. Alternatively, the third feedback may be positive feedback or negative feedback, and each LTM candidate network device (including the first network device) transmits the third feedback.

Accordingly, for the first network device, the configuration update method may further include the following operations.

The first network device receives a third request from the second network device. The third request is used for requesting the first network device to confirm whether the first network device is a network device to which the terminal device is currently accessed.

The first network device transmits third feedback to the second network device. The third feedback is used for the second network device to determine that the first network device is the network device to which the terminal device is currently accessed.

As an example, the configuration update method may include the following operations.
1. The network instructs the UE, based on the LTM candidate cell configuration, to perform the LTM procedure through an LTM cell handover instruction (the MAC CE), for example, if the distributed unit of the S-gNB (the S-gNB-DU) instructs the UE to handover to a certain candidate cell belonging to the C-gNB#1, the C-gNB#1 becomes the T-gNB (the target network device).
2. When the C-gNB#2 needs to update the candidate cell configuration belonging to the C-gNB#2, the C-gNB#2 transmits a third request to all other C-gNBs, and the third request is used to inquire whether each C-gNB is a gNB to which the UE is currently accessed. The T-gNB transmits the third feedback to the C-gNB#2. After receiving the third feedback, the C-gNB#2 performs the following operations.
   (1) The C-gNB#2 transmits a first request to the T-gNB for requesting release of all or a part of the candidate cells belonging to the C-gNB#2 or requesting update of configuration information for all or a part of the candidate cells belonging to the C-gNB#2. Further, the first request includes an identifier of a candidate cell that needs to be released/updated, and/or an updated candidate cell configuration.

The T-gNB transmits first feedback to the C-gNB#2, and the first feedback is used for confirming that the configuration update has been completed.

Optionally, before transmitting the first feedback, the T-gNB transmits the second request to the other C-gNBs and receives the second feedback from the other C-gNBs. The second request includes an ID of a candidate cell that needs to be updated/released, and/or an updated candidate cell configuration. The second feedback includes the candidate cell configuration updated by the C-gNB based on the second request.

Optionally, the T-gNB transmits an RRCReconfiguration message to the UE after receiving the second feedback, and transmits the first feedback to the C-gNB#2 after receiving the RRCReconfigurationComplete message from the UE.

(2) After receiving the first feedback, the C-gNB#2 releases/updates the configuration reserved for the LTM candidate cell.

In any embodiment of the disclosure, information that needs to be interacted between two network devices may be directly contained in an Xn application protocol (XnAP) message or may be contained in an RRC container in the XnAP message. Further, whether various requests/feedbacks/messages are carried by the same XnAP message or different XnAP messages is not limited in the embodiments of the disclosure.

In some embodiments, the configuration update method may further include that: when receiving the first request, a centralized unit (CU) of the first network device instructs a distributed unit (DU) of the first network device to suspend triggering of the LTM procedure.

That is, when the S-gNB receives the first request for requesting to update the LTM candidate cell configuration transmitted by the other C-gNB, the behavior of the S-gNB further includes that: the S-gNB-CU instructs the S-gNB-DU to suspend the triggering of the LTM procedure.

Optionally, the CU may indicate, to the DU, the ID of the candidate cell that needs to be updated, so that the DU may suspend the LTM procedure for handover to the candidate cell corresponding to the ID.

Optionally, when the first network device initiates the update of the LTM candidate cell configuration to other LTM candidate network devices, the CU of the first network device also instructs the DU to suspend the triggering of the LTM procedure.

In some embodiments, the configuration update method may further include that: when determining that the LTM candidate network device(s) associated with the terminal device and/or the terminal device have completed the update of the LTM candidate cell configuration, the CU instructs the DU to resume the triggering of the LTM procedure.

That is, after the S-gNB confirms that the network side and/or the UE side have completed the update, the behavior of the S-gNB further includes instructing the S-gNB-DU to resume the LTM procedure.

Since the configuration update process is controlled by the CU and the LTM is triggered by the DU, the network device and the terminal device are prone to a problem of configuration asynchronization. For example, if the LTM candidate network device has updated the LTM candidate cell configuration while the first network device and the terminal device are completing the RRC reconfiguration process, when the terminal device receives an LTM process of handover to a candidate cell belonging to that LTM candidate network device, the terminal device still uses the old configuration while the LTM candidate network device has completed the update. If the LTM candidate network device updates the configuration after the first network device and the terminal device have completed the RRC reconfiguration process, when the terminal device receives an LTM process triggered to a candidate cell belonging to the LTM candidate network device before the RRC reconfiguration completion information is successfully transmitted, the network device is still using the old configuration while the terminal device has completed the update. According to the above-described embodiment, the CU instructs the DU to suspend the LTM procedure during the update process, which can avoid a handover failure caused by the network and the terminal using different configurations.

In some embodiments of the disclosure, an interaction process between devices during the LTM candidate cell preparation stage is also involved.

Specifically, in some embodiments, before the terminal device accesses the first network device, the configuration update method may further include the following operation.

The first network device/the second network device receives a fourth request from a fourth network device. The fourth request instructs the first network device/the second network device to prepare the LTM candidate cell configuration associated with the terminal device. The fourth request includes at least one of: a measurement result related to the terminal device; a list of LTM candidate cells recommended by the fourth network device; a maximum number of LTM candidate cells; a reference configuration; request information for requesting generation of a reference configuration; or an identifier of the terminal device.

Optionally, the fourth network device may transmit the fourth request to all LTM candidate network devices, including the first network device and the second network device. Specifically, the fourth request is used for requesting each LTM candidate network device to prepare an LTM candidate cell configuration for inter-CU LTM. The measurement result and the list of the LTM candidate cells recommended by the fourth network device in the fourth request may be used by the LTM candidate network device as a reference for determining the LTM candidate cell configuration. The maximum number of LTM candidate cells may be understood as an upper limit on the number of LTM candidate cells that can be configured by the LTM candidate network device. The reference configuration is used for the LTM candidate network device to provide an incremental configuration relative to the reference configuration. If the fourth request includes the reference configuration, the reference configuration is provided by the fourth network device, and the request information for requesting the generation of the reference configuration may not be included in the fourth request. If the fourth request does not include the reference configuration, the request information may be included in the fourth request to cause the LTM candidate network device to provide the reference configuration.

In some embodiments, before the terminal device accesses the first network device and after the fourth request is transmitted, the configuration update method may further include the following operation.

The first network device/the second network device transmits fourth feedback to the fourth network device. The fourth feedback includes information related to one or more LTM candidate cells prepared by the first network device/the second network device, and the information related to the LTM candidate cell(s) includes at least one of: configuration information of the LTM candidate cell(s); the reference configuration; first identifier(s) of the LTM candidate cell(s), the first identifier(s) being used to distinguish the LTM candidate cell(s); second identifier(s) of the LTM candidate cell(s), the second identifier(s) being used for the terminal device to determine whether to reset the information related to the LTM candidate cell(s) when executing the LTM procedure; L1 measurement configuration(s) for monitoring the LTM candidate cell(s); or random access configuration(s) for initiating early sync to the LTM candidate cell(s).

Optionally, the fourth network device may carry the request information for requesting generation of the reference configuration in the fourth request transmitted to all or part of the LTM candidate network devices, and the all or part of the LTM candidate network devices may respond with the reference configuration in the fourth feedback. Alternatively, the fourth network device may not carry the aforementioned request information and the reference configuration in the fourth request, and each LTM candidate network device is expected by default to provide the reference configuration in the fourth feedback.

Optionally, the first identifier of the LTM candidate cell is, for example, an identifier such as a cell global identifier (CGI) or a physical cell identifier (PCI).

Optionally, the second identifier of the LTM candidate cell is, for example, a CellNoReset ID associated with the LTM candidate cell.

Optionally, in the above embodiment, the fourth feedback may only include information about a single candidate cell, and when the first network device/the second network device prepares a plurality of candidate cells, it is necessary to transmit multiple first feedbacks to the fourth network device. Alternatively, the fourth feedback may include information about all LTM candidate cells prepared by the first network device/the second network device.

In some embodiments, before the terminal device accesses the first network device, the configuration update method may further include the following operation.

The first network device/the second network device receives a fifth request from the fourth network device.

The fifth request includes at least one of: third identifier(s) of the LTM candidate cell(s), the third identifier(s) being identifier(s) assigned by the fourth network device; L1 measurement reporting configuration(s) of the LTM candidate cell(s); random access resource configuration(s) for initiating early sync to the LTM candidate cell(s); or TCI state list(s) associated with the LTM candidate cell(s).

Optionally, the third identifier is configured by the fourth network device for each LTM candidate cell after receiving the configuration information for the LTM candidate cell fed back by each LTM candidate network device.

Optionally, the L1 measurement reporting configuration in the fifth request may be used for the first network device/the second network device to update or generate an L1 measurement reporting configuration included in the candidate cell configuration.

Optionally, after receiving the random access resource configuration for initiating the early sync to the LTM candidate cell and/or the TCI state list associated with the LTM candidate cell, the first network device/the second network device transmits the random access resource configuration and/or the TCI state list to the DU associated with the candidate cell through an F1 interface. Alternatively, after the terminal device successfully accesses the first network device/the second network device through the LTM procedure, the CU of the first network device/the second network device then transmits said information to the DU through the F1 interface.

In some embodiments, before the terminal device accesses the first network device and after the fifth request is transmitted, the configuration update method may further include the following operation.

The first network device/the second network device transmits fifth feedback to the fourth network device. The fifth feedback includes an LTM candidate cell configuration associated with the terminal device and belonging to the first network device/the second network device.

Optionally, the first network device/the second network device may provide the LTM candidate cell configuration in the fifth feedback after receiving the fifth request, or may provide the LTM candidate cell configuration in the fourth feedback, update the LTM candidate cell configuration based on the fifth request, and provide the updated LTM candidate cell configuration in the fifth feedback.

Optionally, in the aforementioned embodiment, the seventh request, transmitted by the fourth network device to the other network devices for requesting acting as the anchor device, may be included in the fourth request or the fifth request.

Optionally, in the aforementioned embodiment, the third message, transmitted by the fourth network device to the other network devices for synchronizing the anchor device information, may be included in the fourth request or the fifth request.

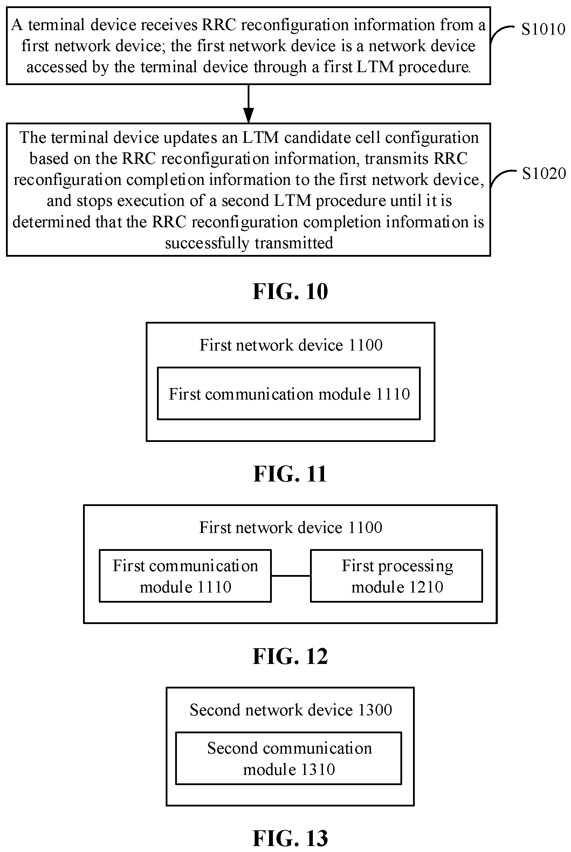

An embodiment of the disclosure further provides a configuration update method on the terminal side. FIG. 10 is a schematic flowchart of a configuration update method according to yet another embodiment of the disclosure. As shown in FIG. 10, the method includes the following operations.

At S1010, a terminal device receives RRC reconfiguration information from a first network device. The first network device is a network device accessed by the terminal device through a first LTM procedure.

At S1011, the terminal device updates an LTM candidate cell configuration based on the RRC reconfiguration information, transmits RRC reconfiguration completion information to the first network device, and stops execution of a second LTM procedure until it is determined that the RRC reconfiguration completion information is successfully transmitted.

Specifically, when the terminal device receives the RRC reconfiguration information including the LTM candidate cell configuration, if the LTM candidate cell configuration indicates the deletion or update of one or more candidate cells, response actions of the terminal device include updating the LTM candidate cell configuration based on the RRC reconfiguration information, and submitting the RRC reconfiguration completion information to a lower layer to transmit the RRC reconfiguration completion information. Before a successful transmission of the RRC reconfiguration completion information is confirmed, the execution of the second LTM procedure is stopped, and the second LTM procedure may include any LTM procedure or a specific LTM procedure.

Optionally, the successful transmission of the RRC reconfiguration completion information may be confirmed when at least one of the following conditions is satisfied: receiving a radio link control (RLC) ACK; receiving an uplink scheduling for a new transmission, and the scheduled uplink resource sharing a same hybrid automatic repeat request (HARQ) process with an uplink resource for transmitting the RRC reconfiguration completion information; or receiving a downlink assignment.

In some embodiments, the second LTM procedure is used for handover to a first LTM candidate cell, and the first LTM candidate cell includes any LTM candidate cell for the terminal device or an LTM candidate cell indicated for deletion or configuration change in the RRC reconfiguration information. That is, the terminal device may suspend the LTM handover to all of the LTM candidate cells, or may only suspend the LTM handover to the updated LTM candidate cell.

In some embodiments, stopping the execution of the second LTM procedure may include the following operation.

When an LTM handover instruction is received, the execution of the second LTM procedure is cancelled or the execution of the second LTM procedure is delayed. For example, the execution of the second LTM procedure may be delayed to a time when it is confirmed that the transmission of the RRC reconfiguration completion information is successful.

According to the above-described embodiment, the terminal device suspends the LTM procedure until the RRC reconfiguration completion information is successfully transmitted, which can avoid a handover failure caused by the network and the terminal using different configurations.

FIG. 11 is a schematic block diagram of a first network device 1100 according to an embodiment of the disclosure. The first network device 1100 includes a first communication module 1110.

The first communication module 1110 is configured to receive a first request from a second network device. The first network device 1100 is a network device accessed by a terminal device through an LTM procedure. The first request is used for requesting an update of an LTM candidate cell configuration associated with the terminal device and belonging to the second network device.

In an implementation, the first communication module 1110 is further configured to transmit first feedback to the second network device. The first feedback is used for confirming the update of the LTM candidate cell configuration associated with the terminal device.

In an implementation, the first communication module 1110 is further configured to transmit a second request to a third network device. The second request includes update information of the LTM candidate cell configuration associated with the terminal device and belonging to the second network device, the update information is determined based on the first request, and the update information instructs the third network device to update an LTM candidate cell configuration associated with the terminal device and belonging to the third network device.

In an implementation, the first communication module 1110 is further configured to receive second feedback from the third network device. The second feedback includes an updated LTM candidate cell configuration associated with the terminal device and updated by the third network device.

In an implementation, the first communication module 1110 is further configured to: transmit RRC reconfiguration information to the terminal device and receive RRC reconfiguration completion information from the terminal device. The RRC reconfiguration information instructs the terminal device to update the LTM candidate cell configuration.

In an implementation, the first communication module 1110 is further configured to: when confirming that the LTM procedure has been completed, transmit a first message to an anchor device. The first message is used for the anchor device to update information about a network device to which the terminal device is currently accessed. The information about the network device is used for LTM candidate network device(s) associated with the terminal device to determine the network device to which the terminal device is currently accessed.

In an implementation, the first communication module 1110 is further configured to receive a second message from a fourth network device. The fourth network device is a network device accessed by the terminal device during an LTM candidate cell preparation. The second message is used for the first network device 1100 to determine an initial anchor device.

In an implementation, the first communication module 1110 is further configured to receive a third message from the initial anchor device. The third message is used for the first network device 1100 to determine a new anchor device.

In an implementation, the first communication module 1110 is further configured to: when confirming that the LTM procedure has been completed, transmit a fourth message to one or more LTM candidate network devices associated with the terminal device. The one or more LTM candidate network devices include the second network device, and the fourth message is used for the one or more LTM candidate network devices to determine that the first network device 1100 is a network device to which the terminal device is currently accessed.

In an implementation, the first communication module 1110 is further configured to: receive a third request from the second network device and transmit third feedback to the second network device. The third request is used for requesting the first network device 1100 to confirm whether the first network device is a network device to which the terminal device is currently accessed. The third feedback is used for the second network device to determine that the first network device 1100 is the network device to which the terminal device is currently accessed.

In an implementation, as shown in FIG. 12, the first network device 1100 further includes a first processing module 1210.

The first processing module 1210 is configured to instruct a DU, through a CU, to suspend triggering of the LTM procedure when receiving the first request.

In an implementation, the first processing module 1210 is further configured to: when determining that the LTM candidate network device(s) associated with the terminal device and/or the terminal device have completed the update of the LTM candidate cell configuration, instruct the DU, through the CU, to resume the triggering of the LTM procedure.

In an implementation, the first communication module 1110 is further configured to receive a fourth request from a fourth network device before the terminal device accesses the first network device 1100. The fourth request instructs the first network device 1100 to prepare the LTM candidate cell configuration associated with the terminal device. The fourth request includes at least one of: a measurement result related to the terminal device; a list of LTM candidate cells recommended by the fourth network device; a maximum number of LTM candidate cells; a reference configuration; request information for requesting generation of a reference configuration; or an identifier of the terminal device.

In an implementation, the first communication module 1110 is further configured to transmit fourth feedback to the fourth network device. The fourth feedback includes information related to one or more LTM candidate cells prepared by the first network device 1100, and the information related to the LTM candidate cell(s) includes at least one of: configuration information of the LTM candidate cell(s); the reference configuration; first identifier(s) of the LTM candidate cell(s), the first identifier(s) being used to distinguish the LTM candidate cell(s); second identifier(s) of the LTM candidate cell(s), the second identifier(s) being used for the terminal device to determine whether to reset the information related to the LTM candidate cell(s) when executing the LTM procedure; L1 measurement configuration(s) for monitoring the LTM candidate cell(s); or random access configuration(s) for initiating early sync to the LTM candidate cell(s).

In an implementation, the first communication module 1110 is further configured to receive a fifth request from the fourth network device before the terminal device accesses the first network device 1100. The fifth request includes at least one of: third identifier(s) of the LTM candidate cell(s), the third identifier(s) being identifier(s) assigned by the fourth network device; L1 measurement reporting configuration(s) of the LTM candidate cell(s); random access resource configuration(s) for initiating early sync to the LTM candidate cell(s); or TCI state list(s) associated with the LTM candidate cell(s).

In an implementation, the first communication module 1110 is further configured to transmit fifth feedback to the fourth network device. The fifth feedback includes an LTM candidate cell configuration associated with the terminal device and belonging to the first network device 1100.

The first network device 1100 according to the embodiment of the disclosure is capable of implementing the corresponding functions of the first network device in the method embodiments described above. The flow, function, implementation and beneficial effect corresponding to each module (sub-module, unit or component, etc.) in the first network device 1100 may refer to the corresponding description in the above method embodiments, and will not be repeated here. It should be noted that, the functions described for various modules (sub-modules, units, components, etc.) in the first network device 1100 in the embodiment of the disclosure may be implemented by different modules (sub-modules, units, components, etc.), or may be implemented by a single module (sub-module, unit, component, etc.).

FIG. 13 is a schematic block diagram of a second network device 1300 according to an embodiment of the disclosure. The second network device 1300 includes a second communication module 1310.

The second communication module 1310 is configured to transmit a first request to a first network device. The first network device is a network device accessed by a terminal device through an LTM procedure. The first request is used for requesting an update of an LTM candidate cell configuration associated with the terminal device and belonging to the second network device 1300.

In an implementation, the second communication module 1310 is further configured to receive first feedback from the first network device. The first feedback is used for confirming the update of the LTM candidate cell configuration associated with the terminal device.

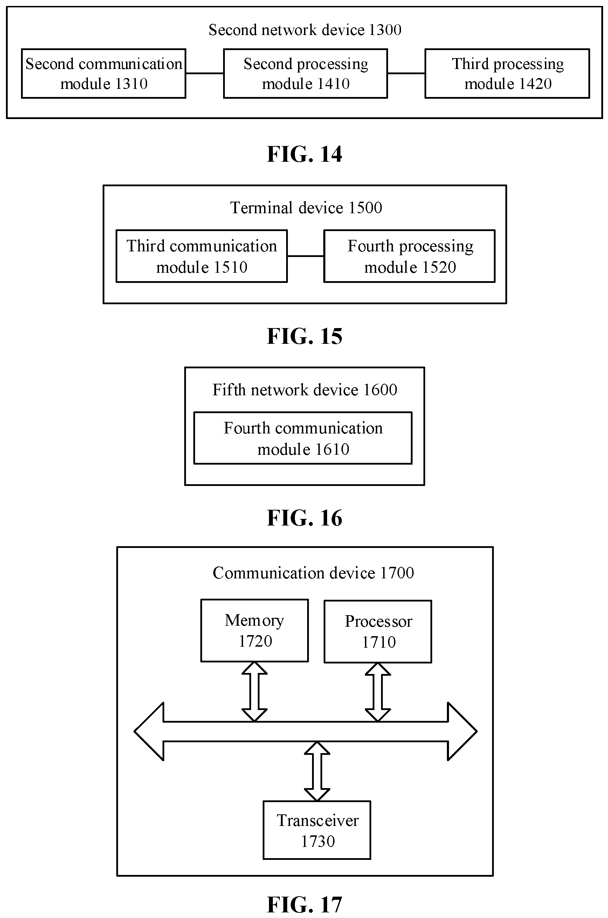

In an implementation, as shown in FIG. 14, the second network device 1300 further includes a second processing module 1410.

The second processing module 1410 is configured to update the LTM candidate cell configuration associated with the terminal device and belonging to the second network device 1300 after receiving the first feedback.

In an implementation, the second communication module 1310 is further configured to: transmit a sixth request to an anchor device and receive sixth feedback from the anchor device. The sixth request is used for requesting an indication of a network device to which the terminal device is currently accessed. The anchor device is configured to store information about the network device to which the terminal device is currently accessed. The sixth feedback is used for the second network device 1300 to determine that the first network device is the network device to which the terminal device is currently accessed.

In an implementation, the second communication module 1310 is further configured to receive a second message from a fourth network device. The fourth network device is a network device accessed by the terminal device during an LTM candidate cell preparation. The second message is used for the second network device 1300 to determine an initial anchor device.

In an implementation, the second communication module 1310 is further configured to receive a third message from the initial anchor device. The third message is used for the second network device 1300 to determine a new anchor device.

In an implementation, the second communication module 1310 is further configured to receive a fourth message transmitted by the first network device when confirming that the LTM procedure has been completed. The fourth message is used for the second network device 1300 to determine that the first network device is the network device to which the terminal device is currently accessed.

In an implementation, the second communication module 1310 is further configured to: transmit a third request to one or more LTM candidate network devices associated with the terminal device and receive third feedback from the one or more LTM candidate network devices. The third request is used for requesting each of the LTM candidate network device(s) to confirm whether the LTM candidate network device is a network device to which the terminal device is currently accessed. The third feedback is used for the second network device 1300 to determine the network device to which the terminal device is currently accessed.

In an implementation, the second communication module 1310 is further configured to receive a second request from the first network device. The second request includes update information of the LTM candidate cell configuration associated with the terminal device.

As shown in FIG. 14, the second network device 1300 further includes a third processing module 1420.

The third processing module 1420 is configured to update the LTM candidate cell configuration associated with the terminal device and belonging to the second network device 1300 based on the update information.

In an implementation, the second communication module 1310 is further configured to transmit second feedback to the first network device. The second feedback includes an updated LTM candidate cell configuration associated with the terminal device and belonging to the second network device 1300.

In an implementation, the second communication module 1310 is further configured to receive a fourth request from a fourth network device. The fourth request instructs the second network device 1300 to prepare the LTM candidate cell configuration associated with the terminal device. The fourth request includes at least one of: a measurement result related to the terminal device; a list of LTM candidate cells recommended by the fourth network device; a maximum number of LTM candidate cells; a reference configuration; request information for requesting generation of a reference configuration; or an identifier of the terminal device.

In an implementation, the second communication module 1310 is further configured to transmit fourth feedback to the fourth network device. The fourth feedback includes information related to one or more LTM candidate cells prepared by the second network device 1300, and the information related to the LTM candidate cell(s) includes at least one of: configuration information of the LTM candidate cell(s); the reference configuration; first identifier(s) of the LTM candidate cell(s), the first identifier(s) being used to distinguish the LTM candidate cell(s); second identifier(s) of the LTM candidate cell(s), the second identifier(s) being used for the terminal device to determine whether to reset the information related to the LTM candidate cell(s) when executing the LTM procedure; L1 measurement configuration(s) for monitoring the LTM candidate cell(s); or random access configuration(s) for initiating early sync to the LTM candidate cell(s).

In an implementation, the second communication module 1310 is further configured to receive a fifth request from the fourth network device. The fifth request includes at least one of: third identifier(s) of the LTM candidate cell(s), the third identifier(s) being identifier(s) assigned by the fourth network device; L1 measurement reporting configuration(s) of the LTM candidate cell(s); random access resource configuration(s) for initiating early sync to the LTM candidate cell(s); or TCI state list(s) associated with the LTM candidate cell(s).

In an implementation, the second communication module 1310 is further configured to transmit, by the second network device 1300, fifth feedback to the fourth network device. The fifth feedback includes the LTM candidate cell configuration associated with the terminal device and belonging to the second network device 1300.

The second network device 1300 according to the embodiment of the disclosure is capable of implementing the corresponding functions of the second network device in the method embodiments described above. The flow, function, implementation and beneficial effect corresponding to each module (sub-module, unit or component, etc.) in the second network device 1300 may refer to the corresponding description in the above method embodiments, and will not be repeated here. It should be noted that, the functions described for various modules (sub-modules, units, components, etc.) in the second network device 1300 in the embodiment of the disclosure may be implemented by different modules (sub-modules, units, components, etc.), or may be implemented by a single module (sub-module, unit, component, etc.).

FIG. 15 is a schematic block diagram of a terminal device 1500 according to an embodiment of the disclosure. The terminal device 1500 includes a third communication module 1510 and a fourth processing module 1520.

The third communication module 1510 is configured to receive RRC reconfiguration information from a first network device. The first network device is a network device accessed by the terminal device through a first LTM procedure.

The fourth processing module 1520 is configured to: update an LTM candidate cell configuration based on the RRC reconfiguration information; transmit RRC reconfiguration completion information to the first network device; and stop execution of a second LTM procedure until it is determined that the RRC reconfiguration completion information is successfully transmitted.

In an implementation, the second LTM procedure is used for handover to a first LTM candidate cell including any LTM candidate cell for the terminal device or an LTM candidate cell indicated for deletion or configuration change in the RRC reconfiguration information.

In an implementation, the fourth processing module 1520 is specifically configured to: when an LTM handover instruction is received, cancel the execution of the second LTM procedure or delay the execution of the second LTM procedure.

The terminal device 1500 according to the embodiment of the disclosure is capable of implementing the corresponding functions of the terminal device in the method embodiments described above. The flow, function, implementation and beneficial effect corresponding to each module (sub-module, unit or component, etc.) in the terminal device 1500 may refer to the corresponding description in the above method embodiments, and will not be repeated here. It should be noted that, the functions described for various modules (sub-modules, units, components, etc.) in the terminal device 1500 in the embodiment of the disclosure may be implemented by different modules (sub-modules, units, components, etc.), or may be implemented by a single module (sub-module, unit, component, etc.).

FIG. 16 is a schematic block diagram of a fifth network device 1600 according to an embodiment of the disclosure. The fifth network device 1600 includes a fourth communication module 1610.

The fourth communication module 1610 is configured to, when the fifth network device is configured as an anchor device, receive a sixth request from a second network device and transmit sixth feedback to the second network device.

The anchor device is configured to store information about a network device to which a terminal device is currently accessed. The sixth request is used for requesting an indication of the network device to which the terminal device is currently accessed. The sixth feedback is used for the second network device to determine the network device to which the terminal device is currently accessed, so that the second network device transmits a first request to the network device to which the terminal device is currently accessed, and the first request is used for requesting an update of an LTM candidate cell configuration associated with the terminal device and belonging to the second network device.

In an implementation, the fourth communication module 1610 is further configured to: when the fifth network device is configured as the anchor device, receive a first message from a first network device. The first network device is a network device accessed by the terminal device after completing an LTM procedure. The first message is used for the fifth network device to update the information about the network device to which the terminal device is currently accessed.

In an implementation, the fourth communication module 1610 is further configured to: receive a seventh request transmitted by a fourth network device during an LTM candidate cell preparation phase and transmit seventh feedback to the fourth network device. The seventh request is used for requesting configuration of the fifth network device as the anchor device. The seventh feedback indicates whether the fifth network device accepts being configured as the anchor device.

In an implementation, the fourth communication module 1610 is further configured to: when the fifth network device is configured as the anchor device, transmit an eighth request to one or more LTM candidate network devices associated with the terminal device, the eighth request being used for requesting the LTM candidate network device(s) to accept being configured as the anchor device; and transmit a third message to the one or more LTM candidate network devices associated with the terminal device when receiving positive feedback for the eighth request from a sixth network device. The third message indicates that the sixth network device is a new anchor device.

The fifth network device 1600 according to the embodiment of the disclosure is capable of implementing the corresponding functions of the fifth network device in the method embodiments described above. The flow, function, implementation and beneficial effect corresponding to each module (sub-module, unit or component, etc.) in the fifth network device 1600 may refer to the corresponding description in the above method embodiments, and will not be repeated here. It should be noted that, the functions described for various modules (sub-modules, units, components, etc.) in the fifth network device 1600 in the embodiment of the disclosure may be implemented by different modules (sub-modules, units, components, etc.), or may be implemented by a single module (sub-module, unit, component, etc.).

FIG. 17 is a schematic structural diagram of a communication device 1700 according to an embodiment of the disclosure. The communication device 1700 includes a processor 1710 that may call a computer program from a memory and execute the computer program to cause the communication device 1700 to implement the methods in the embodiments of the disclosure.

In an implementation, the communication device 1700 may further include a memory 1720. Here, the processor 1710 may call a computer program from the memory 1720 and execute the computer program to cause the communication device 1700 to implement the methods in the embodiments of the disclosure.

The memory 1720 may be a separate device independent of the processor 1710, or may be integrated into the processor 1710.

In an implementation, the communication device 1700 may further include a transceiver 1730, which may be controlled by the processor 1710 to communicate with other devices, specifically, to transmit information or data to other devices or receive information or data transmitted by other devices.

The transceiver 1730 may include a transmitter and a receiver. The transceiver 1730 may further include antennas, and the number of antennas may be one or more.

In an implementation, the communication device 1700 may be the network device in the embodiments of the disclosure, and the communication device 1700 may implement corresponding processes implemented by the network device in various methods in the embodiments of the disclosure, which will not be repeated here for simplicity.

In an implementation, the communication device 1700 may be the terminal device in the embodiments of the disclosure, and the communication device 1700 may implement corresponding processes implemented by the terminal device in various methods in the embodiments of the disclosure, which will not be repeated here for simplicity.

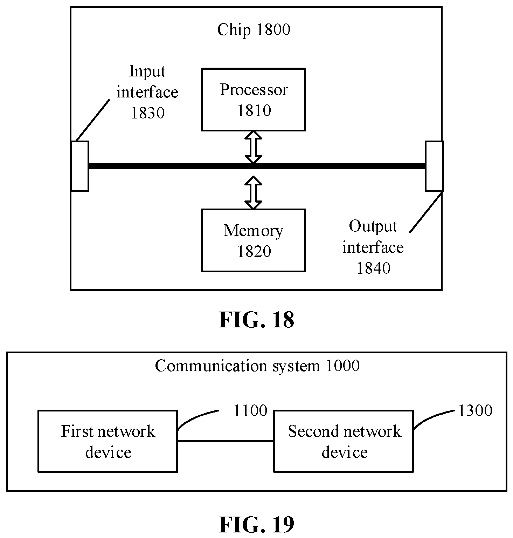

FIG. 18 is a schematic structural diagram of a chip 1800 according to an embodiment of the disclosure. The chip 1800 includes a processor 1810 that may call a computer program from a memory and execute the computer program to implement the methods in the embodiments of the disclosure.

In an implementation, the chip 1800 may further include a memory 1820. Here, the processor 1810 may call a computer program from the memory 1820 and execute the computer program to implement the method executed by the terminal device or the network device in the embodiments of the disclosure.

The memory 1820 may be a separate device independent of the processor 1810, or may be integrated into the processor 1810.

In an implementation, the chip 1800 may further include an input interface 1830. Here, the processor 1810 may control the input interface 1830 to communicate with other devices or chips, specifically, to acquire information or data transmitted by other devices or chips.

In an implementation, the chip 1800 may further include an output interface 1840. Here, the processor 1810 may control the output interface 1840 to communicate with other devices or chips, specifically, to output information or data to other devices or chips.

In an implementation, the chip may be applied to the network device in the embodiments of the disclosure, and the chip may implement the corresponding flow implemented by the network device in each method in the embodiment of the disclosure, which will not be repeated here for simplicity.

In an implementation, the chip may be applied to the terminal device in the embodiments of the disclosure, and the chip may implement the corresponding flow implemented by the terminal device in each method in the embodiment of the disclosure, which will not be repeated here for simplicity.

The chips applied to the network device and the terminal device may be the same chip or different chips.

It will be appreciated that the chip mentioned in the embodiment of the disclosure may also be referred to as a system-level chip, a system chip, a chip system, a system-on-chip, or the like.

The processor mentioned above may be a general purpose processor, a digital signal processor (DSP), a field programmable gate array (FPGA), an application specific integrated circuit (ASIC) or another programmable logic device, a transistor logic device, a discrete hardware component, and the like. Here, the general purpose processor mentioned above may be a microprocessor, any conventional processor, or the like.

The memory mentioned above may be a volatile memory or a non-volatile memory, or may include both the volatile and the non-volatile memories. The non-volatile memory may be a read-only memory (ROM), a programmable read-only memory (PROM), an erasable programmable read-only memory (EPROM), an electrically erasable programmable read-only memory (EPROM), or a flash memory. The volatile memory may be a random access memory (RAM).

It will be appreciated that the above-described memory is described by way of example and is not intended to be limiting, and for example, the memory in the embodiments of the disclosure may also be a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synch link dynamic random access memory (SLDRAM), a direct Rambus random access memory (DR RAM), and the like. That is, the memory in the embodiments of the disclosure is intended to include, but is not limited to, these and any other suitable types of memories.

FIG. 19 is a schematic block diagram of a communication system 1900 according to an embodiment of the disclosure. The communication system 1900 includes a first network device 1100 and a second network device 1300. Optionally, one or more of a terminal device, a fifth network device, and a fourth network device may also be included.

Each of the devices may be used to implement a corresponding function implemented by a respective device in the above-described methods. For the sake of brevity, details will not be described here.

The above-described embodiments may be implemented in whole or in part by software, hardware, firmware, or any combination thereof. When implemented using software, the methods may be implemented in whole or in part in the form of a computer program product. The computer program product includes one or more computer instructions. When the computer program instructions are loaded and executed on a computer, the flows or functions according to the embodiments of the disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center to another website site, computer, server, or data center via a wired (e.g., a coaxial cable, a fiber optic, a digital subscriber line (DSL)) or a wireless (e.g., an infrared, a wireless, a microwave, etc.) manner. The computer-readable storage medium may be any available medium accessible by a computer or a data storage device such as a server, a data center, or the like incorporating one or more of available media. The available medium may be a magnetic medium (e.g., a floppy disk, a hard disk, a magnetic tape), an optical medium (e.g., a DVD), or a semiconductor medium (e.g., a solid state disk (SSD)), or the like.

It will be appreciated that in various embodiments of the disclosure, the sequence numbers of the above-described processes do not imply a particular order of execution. The order of execution of the processes should be determined by their functions and inherent logic, and should not constitute any limitation on the implementation of the embodiments of the disclosure.

Those skilled in the art will clearly appreciate that for convenience and simplicity of the description, the specific working processes of the above-described systems, devices, and units may be referred to the corresponding processes in the above-described method embodiments, and will not be repeated here.

The above descriptions are merely specific implementations of the disclosure, but the scope of protection of the disclosure is not limited thereto. Any person skilled in the art may readily conceive of changes or substitutions within the technical scope disclosed in the disclosure, which shall be encompassed within the scope of protection of the disclosure. Therefore, the scope of protection of the disclosure shall be subject to the scope of protection of the claims.

## Claims

1. A configuration update method, comprising:
receiving, by a first network device, a first request from a second network device, wherein the first network device is a network device accessed by a terminal device through an L1/L2-triggered mobility (LTM) procedure, and the first request is configured for requesting an update of an LTM candidate cell configuration associated with the terminal device and belonging to the second network device.

2. The method of claim 1, further comprising:
transmitting, by the first network device, first feedback to the second network device, wherein the first feedback is used for confirming the update of the LTM candidate cell configuration associated with the terminal device.

3. The method of claim 1 or 2, further comprising:
transmitting, by the first network device, a second request to a third network device, wherein the second request comprises update information of the LTM candidate cell configuration associated with the terminal device and belonging to the second network device, the update information is determined based on the first request, and the update information instructs the third network device to update an LTM candidate cell configuration associated with the terminal device and belonging to the third network device.

4. The method of claim 3, further comprising:
receiving, by the first network device, second feedback from the third network device, wherein the second feedback comprises an updated LTM candidate cell configuration associated with the terminal device and updated by the third network device.

5. The method of any one of claims 1 to 4, further comprising:
transmitting, by the first network device, radio resource control (RRC) reconfiguration information to the terminal device, wherein the RRC reconfiguration information instructs the terminal device to update the LTM candidate cell configuration; and
receiving, by the first network device, RRC reconfiguration completion information from the terminal device.

6. The method of any one of claims 1 to 5, further comprising:
when confirming that the LTM procedure has been completed, transmitting, by the first network device, a first message to an anchor device, wherein the first message is used for the anchor device to update information about a network device to which the terminal device is currently accessed, and the information about the network device is used for LTM candidate network device(s) associated with the terminal device to determine the network device to which the terminal device is currently accessed.

7. The method of claim 6, further comprising:
receiving, by the first network device, a second message from a fourth network device, wherein the fourth network device is a network device accessed by the terminal device during an LTM candidate cell preparation, and the second message is used for the first network device to determine an initial anchor device.

8. The method of claim 7, further comprising:
receiving, by the first network device, a third message from the initial anchor device, wherein the third message is used for the first network device to determine a new anchor device.

9. The method of any one of claims 1 to 5, further comprising:
when confirming that the LTM procedure has been completed, transmitting, by the first network device, a fourth message to one or more LTM candidate network devices associated with the terminal device, wherein the one or more LTM candidate network devices comprise the second network device, and the fourth message is used for the one or more LTM candidate network devices to determine that the first network device is the network device to which the terminal device is currently accessed.

10. The method of any one of claims 1 to 5, further comprising:
receiving, by the first network device, a third request from the second network device, wherein the third request is used for requesting the first network device to confirm whether the first network device is the network device to which the terminal device is currently accessed; and
transmitting, by the first network device, third feedback to the second network device, wherein the third feedback is used for the second network device to determine that the first network device is the network device to which the terminal device is currently accessed.

11. The method of any one of claims 1 to 10, further comprising:
when receiving the first request, instructing, by a centralized unit (CU) of the first network device, a distributed unit (DU) of the first network device to suspend triggering of the LTM procedure.

12. The method of claim 11, further comprising:
when determining that LTM candidate network device(s) associated with the terminal device and/or the terminal device complete the update of the LTM candidate cell configuration, instructing, by the CU, the DU to resume the triggering of the LTM procedure.

13. The method of any one of claims 1 to 12, further comprising:
before the terminal device accesses the first network device,
receiving, by the first network device, a fourth request from a fourth network device, wherein the fourth request instructs the first network device to prepare the LTM candidate cell configuration associated with the terminal device, and the fourth request comprises at least one of:
a measurement result related to the terminal device;
a list of LTM candidate cells recommended by the fourth network device;
a maximum number of LTM candidate cells;
a reference configuration;
request information for requesting generation of a reference configuration; or
an identifier of the terminal device.

14. The method of claim 13, further comprising:
transmitting, by the first network device, fourth feedback to the fourth network device, wherein the fourth feedback comprises information related to one or more LTM candidate cells prepared by the first network device, and the information related to the LTM candidate cell(s) comprises at least one of:
configuration information of the LTM candidate cell(s);
the reference configuration;
first identifier(s) of the LTM candidate cell(s), the first identifier(s) being used for distinguishing the LTM candidate cell(s);
second identifier(s) of the LTM candidate cell(s), the second identifier(s) being used for the terminal device to determine whether to reset the information related to the LTM candidate cell(s) when executing the LTM procedure;
L1 measurement configuration(s) for monitoring the LTM candidate cell(s); or
random access configuration(s) for initiating early sync to the LTM candidate cell(s).

15. The method of any one of claims 1 to 14, further comprising:
before the terminal device accesses the first network device,
receiving, by the first network device, a fifth request from a fourth network device, wherein the fifth request comprises at least one of:
third identifier(s) of LTM candidate cell(s), the third identifier(s) being identifier(s) assigned by the fourth network device;
L1 measurement reporting configuration(s) of LTM candidate cell(s);
random access resource configuration(s) for initiating early sync to LTM candidate cell(s); or
transmission configuration indicator state list(s) associated with LTM candidate cell(s).

16. The method of claim 15, further comprising:
transmitting, by the first network device, fifth feedback to the fourth network device, wherein the fifth feedback comprises an LTM candidate cell configuration associated with the terminal device and belonging to the first network device.

17. A configuration update method, comprising:
transmitting, by a second network device, a first request to a first network device, wherein the first network device is a network device accessed by a terminal device through an L1/L2-triggered mobility (LTM) procedure, and the first request is used for requesting an update of an LTM candidate cell configuration associated with the terminal device and belonging to the second network device.

18. The method of claim 17, further comprising:
receiving, by the second network device, first feedback from the first network device, wherein the first feedback is used for confirming the update of the LTM candidate cell configuration associated with the terminal device.

19. The method of claim 18, further comprising:
updating, by the second network device, the LTM candidate cell configuration associated with the terminal device and belonging to the second network device after receiving the first feedback.

20. The method of any one of claims 17 to 19, further comprising:
transmitting, by the second network device, a sixth request to an anchor device, wherein the sixth request is used for requesting an indication of a network device to which the terminal device is currently accessed, and the anchor device is configured to store information about the network device to which the terminal device is currently accessed; and
receiving, by the second network device, sixth feedback from the anchor device, wherein the sixth feedback is used for the second network device to determine that the first network device is the network device to which the terminal device is currently accessed.

21. The method of claim 20, further comprising:
receiving, by the second network device, a second message from a fourth network device, wherein the fourth network device is a network device accessed by the terminal device during an LTM candidate cell preparation, and the second message is used for the second network device to determine an initial anchor device.

22. The method of claim 21, further comprising:
receiving, by the second network device, a third message from the initial anchor device, wherein the third message is used for the second network device to determine a new anchor device.

23. The method of any one of claims 17 to 19, further comprising:
receiving, by the second network device, a fourth message transmitted by the first network device when confirming that the LTM procedure has been completed, wherein the fourth message is used for the second network device to determine that the first network device is a network device to which the terminal device is currently accessed.

24. The method of any one of claims 17 to 19, further comprising:
transmitting, by the second network device, a third request to one or more LTM candidate network devices associated with the terminal device, wherein the third request is used for requesting each of the LTM candidate network device(s) to confirm whether the LTM candidate network device is a network device to which the terminal device is currently accessed; and
receiving, by the second network device, third feedback from the one or more LTM candidate network devices, wherein the third feedback is used for the second network device to determine the network device to which the terminal device is currently accessed.

25. The method of any one of claims 17 to 24, further comprising:
receiving, by the second network device, a second request from the first network device, wherein the second request comprises update information of the LTM candidate cell configuration associated with the terminal device; and
updating, by the second network device based on the update information, the LTM candidate cell configuration associated with the terminal device and belonging to the second network device.

26. The method of claim 25, further comprising:
transmitting, by the second network device, second feedback to the first network device, wherein the second feedback comprises an updated LTM candidate cell configuration associated with the terminal device and belonging to the second network device.

27. The method of any one of claims 17 to 26, further comprising:
receiving, by the second network device, a fourth request from a fourth network device, wherein the fourth request instructs the second network device to prepare the LTM candidate cell configuration associated with the terminal device, and the fourth request comprises at least one of:
a measurement result related to the terminal device;
a list of LTM candidate cells recommended by the fourth network device;
a maximum number of LTM candidate cells;
a reference configuration;
request information for requesting generation of a reference configuration; or
an identifier of the terminal device.

28. The method of claim 27, further comprising:
transmitting, by the second network device, fourth feedback to the fourth network device, wherein the fourth feedback comprises information related to one or more LTM candidate cells prepared by the second network device, and the information related to the LTM candidate cell(s) comprises at least one of:
configuration information of the LTM candidate cell(s);
the reference configuration;
first identifier(s) of the LTM candidate cell(s), the first identifier(s) being used for distinguishing the LTM candidate cell(s);
second identifier(s) of the LTM candidate cell(s), the second identifier(s) being used for the terminal device to determine whether to reset the information related to the LTM candidate cell(s) when executing the LTM procedure;
L1 measurement configuration(s) for monitoring the LTM candidate cell(s); or
random access configuration(s) for initiating early sync to the LTM candidate cell(s).

29. The method of any one of claims 17 to 28, further comprising:
receiving, by the second network device, a fifth request from a fourth network device, wherein the fifth request comprises at least one of:
third identifier(s) of LTM candidate cell(s), the third identifier(s) being identifier(s) assigned by the fourth network device;
L1 measurement reporting configuration(s) of LTM candidate cell(s);
random access resource configuration(s) for initiating early sync to LTM candidate cell(s); or
transmission configuration indicator state list(s) associated with LTM candidate cell(s).

30. The method of claim 29, further comprising:
transmitting, by the second network device, fifth feedback to the fourth network device, wherein the fifth feedback comprises the LTM candidate cell configuration associated with the terminal device and belonging to the second network device.

31. A configuration update method, comprising:
receiving, by a terminal device, radio resource control (RRC) reconfiguration information from a first network device, wherein the first network device is a network device accessed by the terminal device through a first L1/L2-triggered mobility (LTM) procedure;
updating, by the terminal device, an LTM candidate cell configuration based on the RRC reconfiguration information, transmitting RRC reconfiguration completion information to the first network device, and stopping execution of a second LTM procedure until it is determined that the RRC reconfiguration completion information is successfully transmitted.

32. The method of claim 31, wherein the second LTM procedure is used for handover to a first LTM candidate cell comprising any LTM candidate cell for the terminal device or an LTM candidate cell indicated for deletion or configuration change in the RRC reconfiguration information.

33. The method of claim 31 or 32, wherein stopping execution of the second LTM procedure comprises:
when an LTM handover instruction is received, cancelling the execution of the second LTM procedure or delaying the execution of the second LTM procedure.

34. A configuration update method, comprising:
when a fifth network device is configured as an anchor device, receiving, by the fifth network device, a sixth request from a second network device, wherein the sixth request is used for requesting an indication of a network device to which a terminal device is currently accessed, and the anchor device is configured to store information about the network device to which the terminal device is currently accessed; and
transmitting, by the fifth network device, sixth feedback to the second network device, wherein the sixth feedback is used for the second network device to determine the network device to which the terminal device is currently accessed, so that the second network device transmits a first request to the network device to which the terminal device is currently accessed, and the first request is used for requesting an update of an L1/L2-triggered mobility (LTM) candidate cell configuration associated with the terminal device and belonging to the second network device.

35. The method of claim 34, further comprising:
when the fifth network device is configured as the anchor device, receiving, by the fifth network device, a first message from a first network device, wherein the first network device is a network device accessed by the terminal device after completing an LTM procedure, and the first message is used for the fifth network device to update the information about the network device to which the terminal device is currently accessed.

36. The method of claim 34 or 35, further comprising:
receiving, by the fifth network device, a seventh request transmitted by a fourth network device during an LTM candidate cell preparation stage, wherein the seventh request is used for requesting configuration of the fifth network device as the anchor device; and
transmitting, by the fifth network device, seventh feedback to the fourth network device, wherein the seventh feedback indicates whether the fifth network device accepts being configured as the anchor device.

37. The method of any one of claims 34 to 36, further comprising:
when the fifth network device is configured as the anchor device, transmitting, by the fifth network device, an eighth request to one or more LTM candidate network devices associated with the terminal device, wherein the eighth request is used for requesting the LTM candidate network device(s) to accept being configured as the anchor device; and
transmitting, by the fifth network device, a third message to the one or more LTM candidate network devices associated with the terminal device when receiving positive feedback for the eighth request from a sixth network device, wherein the third message indicates that the sixth network device is a new anchor device.

38. A first network device, comprising:
a first communication module, configured to receive a first request from a second network device, wherein the first network device is a network device accessed by a terminal device through an L1/L2-triggered mobility (LTM) procedure, and the first request is configured for requesting an update of an LTM candidate cell configuration associated with the terminal device and belonging to the second network device.

39. The first network device of claim 38, wherein the first communication module is further configured to:
transmit first feedback to the second network device, wherein the first feedback is used for confirming the update of the LTM candidate cell configuration associated with the terminal device.

40. The first network device of claim 38 or 39, wherein the first communication module is further configured to:
transmit a second request to a third network device, wherein the second request comprises update information of the LTM candidate cell configuration associated with the terminal device and belonging to the second network device, the update information is determined based on the first request, and the update information instructs the third network device to update an LTM candidate cell configuration associated with the terminal device and belonging to the third network device.

41. The first network device of claim 40, wherein the first communication module is further configured to:
receive second feedback from the third network device, wherein the second feedback comprises an updated LTM candidate cell configuration associated with the terminal device and updated by the third network device.

42. The first network device of any one of claims 38 to 41, wherein the first communication module is further configured to:
transmit radio resource control (RRC) reconfiguration information to the terminal device and receive RRC reconfiguration completion information from the terminal device, wherein the RRC reconfiguration information instructs the terminal device to update the LTM candidate cell configuration.

43. The first network device of any one of claims 38 to 42, wherein the first communication module is further configured to:
when confirming that the LTM procedure has been completed, transmit a first message to an anchor device, wherein the first message is used for the anchor device to update information about a network device to which the terminal device is currently accessed, and the information about the network device is used for LTM candidate network device(s) associated with the terminal device to determine the network device to which the terminal device is currently accessed.

44. The first network device of claim 43, wherein the first communication module is further configured to:
receive a second message from a fourth network device, wherein the fourth network device is a network device accessed by the terminal device during an LTM candidate cell preparation, and the second message is used for the first network device to determine an initial anchor device.

45. The first network device of claim 44, wherein the first communication module is further configured to:
receive a third message from the initial anchor device, wherein the third message is used for the first network device to determine a new anchor device.

46. The first network device of any one of claims 38 to 42, wherein the first communication module is further configured to:
when confirming that the LTM procedure has been completed, transmit a fourth message to one or more LTM candidate network devices associated with the terminal device, wherein the one or more LTM candidate network devices comprise the second network device, and the fourth message is used for the one or more LTM candidate network devices to determine that the first network device is the network device to which the terminal device is currently accessed.

47. The first network device of any one of claims 38 to 42, wherein the first communication module is further configured to:
receive a third request from the second network device and transmit third feedback to the second network device, wherein the third request is used for requesting the first network device to confirm whether the first network device is the network device to which the terminal device is currently accessed, and the third feedback is used for the second network device to determine that the first network device is the network device to which the terminal device is currently accessed.

48. The first network device of any one of claims 38 to 47, further comprising:
a first processing module, configured to instruct a distributed unit (DU) to suspend triggering of the LTM procedure through a centralized unit (CU) when receiving the first request.

49. The first network device of claim 48, wherein the first processing module is further configured to:
when determining that LTM candidate network device(s) associated with the terminal device and/or the terminal device complete the update of the LTM candidate cell configuration, instruct the DU, through the CU, to resume the triggering of the LTM procedure.

50. The first network device of any one of claims 38 to 49, wherein the first communication module is further configured to:
before the terminal device accesses the first network device,
receive a fourth request from a fourth network device, wherein the fourth request instructs the first network device to prepare the LTM candidate cell configuration associated with the terminal device, and the fourth request comprises at least one of:
a measurement result related to the terminal device;
a list of LTM candidate cells recommended by the fourth network device;
a maximum number of LTM candidate cells;
a reference configuration;
request information for requesting generation of a reference configuration; or
an identifier of the terminal device.

51. The first network device of claim 50, wherein the first communication module is further configured to:
transmit fourth feedback to the fourth network device, wherein the fourth feedback comprises information related to one or more LTM candidate cells prepared by the first network device, and the information related to the LTM candidate cell(s) comprises at least one of:
configuration information of the LTM candidate cell(s);
the reference configuration;
first identifier(s) of the LTM candidate cell(s), the first identifier(s) being used for distinguishing the LTM candidate cell(s);
second identifier(s) of the LTM candidate cell(s), the second identifier(s) being used for the terminal device to determine whether to reset the information related to the LTM candidate cell(s) when executing the LTM procedure;
L1 measurement configuration(s) for monitoring the LTM candidate cell(s); or
random access configuration(s) for initiating early sync to the LTM candidate cell(s).

52. The first network device of any one of claims 38 to 51, wherein the first communication module is further configured to:
before the terminal device accesses the first network device,
receive a fifth request from a fourth network device, wherein the fifth request comprises at least one of:
third identifier(s) of LTM candidate cell(s), the third identifier(s) being identifier(s) assigned by the fourth network device;
L1 measurement reporting configuration(s) of LTM candidate cell(s);
random access resource configuration(s) for initiating early sync to LTM candidate cell(s); or
transmission configuration indicator state list(s) associated with LTM candidate cell(s).

53. The first network device of claim 52, wherein the first communication module is further configured to:
transmit fifth feedback to the fourth network device, wherein the fifth feedback comprises an LTM candidate cell configuration associated with the terminal device and belonging to the first network device.

54. A second network device, comprising:
a second communication module, configured to transmit a first request to a first network device, wherein the first network device is a network device accessed by a terminal device through an L1/L2-triggered mobility (LTM) procedure, and the first request is used for requesting an update of an LTM candidate cell configuration associated with the terminal device and belonging to the second network device.

55. The second network device of claim 54, wherein the second communication module is further configured to:
receive first feedback from the first network device, wherein the first feedback is used for confirming the update of the LTM candidate cell configuration associated with the terminal device.

56. The second network device of claim 55, further comprising:
a second processing module, configured to update the LTM candidate cell configuration associated with the terminal device and belonging to the second network device, after receiving the first feedback.

57. The second network device of any one of claims 54 to 56, wherein the second communication module is further configured to:
transmit a sixth request to an anchor device and receive sixth feedback from the anchor device, wherein the sixth request is used for requesting an indication of a network device to which the terminal device is currently accessed, the anchor device is configured to store information about the network device to which the terminal device is currently accessed, and the sixth feedback is used for the second network device to determine that the first network device is the network device to which the terminal device is currently accessed.

58. The second network device of claim 58, wherein the second communication module is further configured to:
receive a second message from a fourth network device, wherein the fourth network device is a network device accessed by the terminal device during an LTM candidate cell preparation, and the second message is used for the second network device to determine an initial anchor device.

59. The second network device of claim 58, wherein the second communication module is further configured to:
receive a third message from the initial anchor device, wherein the third message is used for the second network device to determine a new anchor device.

60. The second network device of any one of claims 54 to 56, wherein the second communication module is further configured to:
receive a fourth message transmitted by the first network device when confirming that the LTM procedure has been completed, wherein the fourth message is used for the second network device to determine that the first network device is a network device to which the terminal device is currently accessed.

61. The second network device of any one of claims 54 to 56, wherein the second communication module is further configured to:
transmit a third request to one or more LTM candidate network devices associated with the terminal device and receive third feedback from the one or more LTM candidate network devices, wherein the third request is used for requesting each of the LTM candidate network device(s) to confirm whether the LTM candidate network device is a network device to which the terminal device is currently accessed, and the third feedback is used for the second network device to determine the network device to which the terminal device is currently accessed.

62. The second network device of any one of claims 54 to 61, wherein the second communication module is further configured to:
receive a second request from the first network device, wherein the second request comprises update information of the LTM candidate cell configuration associated with the terminal device; and
the second network device further comprises:
a third processing module, configured to update, based on the update information, the LTM candidate cell configuration associated with the terminal device and belonging to the second network device.

63. The second network device of claim 62, wherein the second communication module is further configured to:
transmit second feedback to the first network device, wherein the second feedback comprises an updated LTM candidate cell configuration associated with the terminal device and belonging to the second network device.

64. The second network device of any one of claims 54 to 63, wherein the second communication module is further configured to:
receive a fourth request from a fourth network device, wherein the fourth request instructs the second network device to prepare the LTM candidate cell configuration associated with the terminal device, and the fourth request comprises at least one of:
a measurement result related to the terminal device;
a list of LTM candidate cells recommended by the fourth network device;
a maximum number of LTM candidate cells;
a reference configuration;
request information for requesting generation of a reference configuration; or
an identifier of the terminal device.

65. The second network device of claim 64, wherein the second communication module is further configured to:
transmit fourth feedback to the fourth network device, wherein the fourth feedback comprises information related to one or more LTM candidate cells prepared by the second network device, and the information related to the LTM candidate cell(s) comprises at least one of:
configuration information of the LTM candidate cell(s);
the reference configuration;
first identifier(s) of the LTM candidate cell(s), the first identifier(s) being used for distinguishing the LTM candidate cell(s);
second identifier(s) of the LTM candidate cell(s), the second identifier(s) being used for the terminal device to determine whether to reset the information related to the LTM candidate cell(s) when executing the LTM procedure;
L1 measurement configuration(s) for monitoring the LTM candidate cell(s); or
random access configuration(s) for initiating early sync to the LTM candidate cell(s).

66. The second network device of any one of claims 54 to 65, wherein the second communication module is further configured to:
receive a fifth request from a fourth network device, wherein the fifth request comprises at least one of:
third identifier(s) of LTM candidate cell(s), the third identifier(s) being identifier(s) assigned by the fourth network device;
L1 measurement reporting configuration(s) of LTM candidate cell(s);
random access resource configuration(s) for initiating early sync to LTM candidate cell(s); or
transmission configuration indicator state list(s) associated with LTM candidate cell(s).

67. The second network device of claim 66, wherein the second communication module is further configured to:
transmit, through the second network device, fifth feedback to the fourth network device, wherein the fifth feedback comprises the LTM candidate cell configuration associated with the terminal device and belonging to the second network device.

68. A terminal device, comprising:
a third communication module, configured to receive radio resource control (RRC) reconfiguration information from a first network device, wherein the first network device is a network device accessed by the terminal device through a first L1/L2-triggered mobility (LTM) procedure; and
a fourth processing module, configured to update an LTM candidate cell configuration based on the RRC reconfiguration information, transmit RRC reconfiguration completion information to the first network device, and stop execution of a second LTM procedure until it is determined that the RRC reconfiguration completion information is successfully transmitted.

69. The terminal device of claim 68, wherein the second LTM procedure is used for handover to a first LTM candidate cell comprising any LTM candidate cell for the terminal device or an LTM candidate cell indicated for deletion or configuration change in the RRC reconfiguration information.

70. The terminal device of claim 68 or 69, wherein the fourth processing module is specifically configured to:
when an LTM handover instruction is received, cancel the execution of the second LTM procedure or delay the execution of the second LTM procedure.

71. A fifth network device, comprising:
a fourth communication module, configured to receive a sixth request from a second network device and transmit sixth feedback to the second network device, when the fifth network device is configured as an anchor device,
wherein the anchor device is configured to store information about a network device to which a terminal device is currently accessed, the sixth request is used for requesting an indication of the network device to which the terminal device is currently accessed, and the sixth feedback is used for the second network device to determine the network device to which the terminal device is currently accessed, so that the second network device transmits a first request to the network device to which the terminal device is currently accessed, and the first request is used for requesting an update of an L1/L2-triggered mobility (LTM) candidate cell configuration associated with the terminal device and belonging to the second network device.

72. The fifth network device of claim 71, wherein the fourth communication module is further configured to:
receive a first message from a first network device when the fifth network device is configured as the anchor device, wherein the first network device is a network device accessed by the terminal device after completing an LTM procedure, and the first message is used for the fifth network device to update the information about the network device to which the terminal device is currently accessed.

73. The fifth network device of claim 71 or 72, wherein the fourth communication module is further configured to:
receive a seventh request transmitted by a fourth network device during an LTM candidate cell preparation phase and transmit seventh feedback to the fourth network device, wherein the seventh request is used for requesting configuration of the fifth network device as the anchor device, and the seventh feedback indicates whether the fifth network device accepts being configured as the anchor device.

74. The fifth network device of any one of claims 71 to 73, wherein the fourth communication module is further configured to:
transmit an eighth request to one or more LTM candidate network devices associated with the terminal device when the fifth network device is configured as the anchor device, wherein the eighth request is used for requesting the LTM candidate network device(s) to accept being configured as the anchor device; and
transmit a third message to the one or more LTM candidate network devices associated with the terminal device when receiving positive feedback for the eighth request from a sixth network device, wherein the third message indicates that the sixth network device is a new anchor device.

75. A first network device, comprising: a transceiver, a processor, and a memory, wherein the memory is configured to store a computer program, the transceiver is configured to communicate with other devices, and the processor is configured to call and execute the computer program stored in the memory to cause the first network device to perform the method of any one of claims 1 to 16.

76. A second network device, comprising: a transceiver, a processor, and a memory, wherein the memory is configured to store a computer program, the transceiver is configured to communicate with other devices, and the processor is configured to call and execute the computer program stored in the memory to cause the second network device to perform the method of any one of claims 17 to 30.

77. A terminal device, comprising: a transceiver, a processor, and a memory, wherein the memory is configured to store a computer program, the transceiver is configured to communicate with other devices, and the processor is configured to call and execute the computer program stored in the memory to cause the terminal device to perform the method of any one of claims 31 to 33.

78. A fifth network device, comprising: a transceiver, a processor, and a memory, wherein the memory is configured to store a computer program, the transceiver is configured to communicate with other devices, and the processor is configured to call and execute the computer program stored in the memory to cause the fifth network device to perform the method of any one of claims 34 to 37.

79. A chip, comprising a processor configured to call a computer program from a memory and execute the computer program to cause a device on which the chip is mounted to perform the method of any one of claims 1 to 37.

80. A computer-readable storage medium for storing a computer program that, when executed by a device, causes the device to perform the method of any one of claims 1 to 37.

81. A computer program product, comprising computer program instructions that cause a computer to perform the method of any one of claims 1 to 37.

82. A computer program that causes a computer to perform the method of any one of claims 1 to 37.

83. A communication system, comprising:
a first network device, configured to perform the method of any one of claims 1 to 16; and
a second network device, configured to perform the method of any one of claims 17 to 30.
